# EUROPEAN PATENT APPLICATION

(11) **EP 4 800 512 A1**
(43) Date of publication of application: **02.09.2026**
(21) Application number: 24910770.7
(22) Date of filing: 13.12.2024
(51) Int. Cl.: G05D 1/43

(54) **AUTONOMOUS MOBILE DEVICE AND WORKING SYSTEM THEREOF, AND EXTERNAL DEVICE**

(30) Priority: 27.12.2023 CN 202311825474; 27.12.2023 CN 202311833769; 27.12.2023 CN 202311825304
(71) Applicant: Nanjing Chervon Industry Co., Ltd., Nanjing, Jiangsu 211106 (CN)
(72) Inventor: LI, Feng, Nanjing, Jiangsu 211106 (CN); YAO, Surui, Nanjing, Jiangsu 211106 (CN); SHI, Lingjian, Nanjing, Jiangsu 211106 (CN); ZHANG, Peng, Nanjing, Jiangsu 211106 (CN); ZHAO, Dan, Nanjing, Jiangsu 211106 (CN)
(74) Representative: Sun, Yiming
(86) International application number: PCT/CN2024/139025
(87) International publication number: WO 2025/139839

(57) **Abstract**

A working system of an autonomous mobile device includes the autonomous mobile device, a first base station, and a second base station, where the autonomous mobile device includes a controller and at least one radio, and the controller is configured to, within a current cycle, configure the radio to receive a first signal from the first base station and acquire a first common-view satellite parameter and a first communication parameter with the first base station based on the first signal; after the end of the current cycle, configure the radio to receive a second signal from the second base station and acquire a second common-view satellite parameter and a second communication parameter with the second base station based on the second signal; evaluate a signal quality of the first base station and a signal quality of the second base station based on the first and second common-view satellite parameters and the first and second communication parameters, and in the case where the signal quality of the second base station is better than the signal quality of the first base station, configure, within the next cycle, the radio to receive the second signal from the second base station.

## Description

This application claims priority to Chinese Patent Application No. 202311825474.5, Chinese Patent Application No. 202311833769.7, and Chinese Patent Application No. 202311825304.7 filed with the China National Intellectual Property Administration (CNIPA) on Dec. 27, 2023, the disclosures of which are incorporated herein by reference in their entireties.

### TECHNICAL FIELD

The present application relates to the technical field of power tools, for example, an autonomous mobile device and a working system thereof, and an external device.

### BACKGROUND

Autonomous mobile devices represented by mowers perform tasks such as mowing within certain working regions. Considering that global navigation satellite systems (GNSSs) such as the Global Positioning System (GPS) are affected by factors such as weather and obstacle and have limited positioning accuracy, an autonomous mobile device may form a working system further including a base station and implement its own positioning and navigation within a working region through differential positioning. Based on a known installation position of the base station and satellite observation data obtained through interaction with a satellite positioning system, the base station in the working system may compute differential data for the autonomous mobile device to correct an error of the satellite positioning system and transmit the differential data to the autonomous mobile device.

Due to a limited signal coverage range of the base station, more than one base station is generally required within a working site of the autonomous mobile device which has a relatively large area. Related problems such as the deployment of multiple base stations and the control of the autonomous mobile device in similar scenarios remain to be solved. Additionally, there are currently some service providers that provide network real-time kinematic (RTK) services. Customers who have subscribed to the network RTK services can access the Internet and request, from the network RTK service providers, differential data computed by the network RTK service providers to correct positioning errors.

This part provides background information related to the present application, and the background information is not necessarily the existing art.

### SUMMARY

An object of the present application is to solve or at least alleviate part or all of the preceding problems. Therefore, the present application provides an autonomous mobile device and a working system thereof, and an external device.

A working system of an autonomous mobile device includes the autonomous mobile device configured to autonomously travel and complete a task; a first base station configured to compute and generate first differential data; and a second base station configured to compute and generate second differential data. The autonomous mobile device includes a controller and at least one radio; and the controller is configured to, within a current cycle, configure the radio to receive a first signal from the first base station and acquire a first common-view satellite parameter and a first communication parameter between the autonomous mobile device and the first base station based on the first signal; after the end of the current cycle, configure the radio to receive a second signal from the second base station and acquire a second common-view satellite parameter and a second communication parameter between the autonomous mobile device and the second base station based on the second signal; and evaluate a signal quality of the first base station based on the first common-view satellite parameter and the first communication parameter, evaluate a signal quality of the second base station based on the second common-view satellite parameter and the second communication parameter, and in the case where the signal quality of the second base station is better than the signal quality of the first base station, configure, within the next cycle, the radio to receive the second signal from the second base station.

In some examples, the controller is configured to, in the case where a difference between the second common-view satellite parameter and the first common-view satellite parameter exceeds a first threshold and a difference between the first communication parameter and the second communication parameter exceeds a second threshold, configure, within the next cycle, the radio to receive the first signal from the first base station.

In some examples, the first common-view satellite parameter or the second common-view satellite parameter includes at least one of: the number of common-view satellites between the autonomous mobile device and the first base station or the second base station, or an angular coverage of common-view satellites between the autonomous mobile device and the first base station or the second base station.

In some examples, the first communication parameter or the second communication parameter includes a time interval between first signals or second signals received by the autonomous mobile device.

In some examples, the controller is configured to obtain satellite observation data of the first base station from the first signal and determine common-view satellites between the autonomous mobile device and the first base station based on satellite observation data of the autonomous mobile device and the satellite observation data of the first base station, and/or obtain satellite observation data of the second base station from the second signal and determine common-view satellites between the autonomous mobile device and the second base station based on satellite observation data of the autonomous mobile device and the satellite observation data of the second base station.

In some examples, the satellite observation data of the first base station or the second base station includes satellite numbers, satellite elevation angles, and signal-to-noise ratios of visible satellites of the first base station or the second base station, and the satellite observation data of the autonomous mobile device includes satellite numbers, satellite elevation angles, and signal-to-noise ratios of visible satellite of the autonomous mobile device.

In some examples, each of the common-view satellites between the autonomous mobile device and the first base station or the second base station has a satellite elevation angle exceeding an elevation angle threshold and a signal-to-noise ratio exceeding a signal-to-noise ratio threshold.

In some examples, the controller is configured to, in the case where the signal quality of the first base station is better than the signal quality of the second base station, configure, within the next cycle, the radio to receive the first signal from the first base station.

In some examples, the autonomous mobile device includes one radio.

In some examples, the autonomous mobile device includes a first radio and a second radio; the first radio is configured to receive a first signal from the first base station, where the first signal includes the first differential data; the second radio is configured to receive a second signal from the second base station, where the second signal includes the second differential data; and the autonomous mobile device is configured to correct, based on the first differential data and/or the second differential data, initial coordinates of the autonomous mobile device computed based on a satellite signal to obtain device coordinates of the autonomous mobile device after correction and control the autonomous mobile device based on the device coordinates.

In some examples, the autonomous mobile device is configured to correct the initial coordinates based on the first differential data to obtain first device coordinates and correct the initial coordinates based on the second differential data to obtain second device coordinates; and compare a solution accuracy of the first device coordinates and a solution accuracy of the second device coordinates and select device coordinates with a higher solution accuracy as the final device coordinates.

In some examples, the autonomous mobile device is configured to, in the case where the first device coordinates are a fixed solution and the second device coordinates are a floating point solution, select the first device coordinates as the final device coordinates; and in the case where the first device coordinates are a floating point solution and the second device coordinates are a fixed solution, select the second device coordinates as the final device coordinates.

In some examples, the autonomous mobile device is configured to, in the case where both the first device coordinates and the second device coordinates are fixed solutions or floating point solutions, evaluate the signal quality of the first base station and the signal quality of the second base station and select device coordinates corresponding to a base station with a better signal quality as the final device coordinates.

In some examples, the autonomous mobile device is further configured to acquire differential data from a network RTK service provider in the case where a communication parameter between the autonomous mobile device and a base station fails to satisfy a corresponding parameter requirement.

In some examples, the autonomous mobile device is configured to acquire the differential data from the network RTK service provider in the case where the communication parameter between the autonomous mobile device and the base station or an operation value of the communication parameter exceeds a corresponding parameter threshold.

In some examples, the communication parameter includes at least one of a distance parameter between the autonomous mobile device and the base station, a data loss parameter between the autonomous mobile device and the base station, or a common-view satellite parameter between the autonomous mobile device and the base station.

In some examples, the autonomous mobile device is further configured to periodically detect whether a current communication parameter satisfies the corresponding parameter requirement and, in the case where the communication parameter satisfies the corresponding parameter requirement, stop acquiring the differential data from the network RTK service provider and switch to acquiring differential data from the base station.

In some examples, the first base station is configured to, after installation, determine first installation coordinates of the first base station and be set to a base station mode with the first installation coordinates; and the second base station is configured to, after installation, be set to a mobile station mode, compute second installation coordinates of the second base station in a coordinate system of the first base station, and be set to the base station mode with the second installation coordinates.

In some examples, the first installation coordinates are acquired manually; the first installation coordinates are acquired by the first base station through single-point convergence computation; or the first installation coordinates are acquired by the first base station through network RTK.

In some examples, the working system further includes a third base station, and the third base station is configured to, after installation, be set to the mobile station mode, compute third installation coordinates of the third base station in a coordinate system of the first base station or the second base station, and be set to the base station mode with the third installation coordinates.

In some examples, a working region of the autonomous mobile device includes multiple sub-regions, and each of the multiple sub-regions corresponds to one base station; and the controller is configured to compute device coordinates of the autonomous mobile device based on a satellite signal and a radio signal from a base station, determine a sub-region where the autonomous mobile device is currently located based on the device coordinates, and configure the radio to receive a radio signal from a base station corresponding to the sub-region where the autonomous mobile device is currently located.

An autonomous mobile device includes a housing; a traveling assembly including a traveling electric motor and traveling wheels, where the traveling assembly is coupled to the housing; a mobile station including a satellite receiving antenna and one radio, where the satellite receiving antenna is configured to acquire a satellite signal, and the one radio is configured to receive a first signal from a first base station or a second signal from a second base station; and a controller. The controller is configured to, within a current cycle, configure the radio to receive the first signal from the first base station and acquire a first common-view satellite parameter and a first communication parameter between the autonomous mobile device and the first base station based on the first signal; after the end of the current cycle, configure the radio to receive the second signal from the second base station and acquire a second common-view satellite parameter and a second communication parameter between the autonomous mobile device and the second base station based on the second signal; and evaluate a signal quality of the first base station based on the first common-view satellite parameter and the first communication parameter, evaluate a signal quality of the second base station based on the second common-view satellite parameter and the second communication parameter, and in the case where the signal quality of the second base station is better than the signal quality of the first base station, configure, within the next cycle, the radio to receive the second signal from the second base station.

A working system of an autonomous mobile device includes the autonomous mobile device configured to autonomously travel and complete a task; a first base station configured to compute and generate first differential data; and a second base station configured to compute and generate second differential data. The autonomous mobile device includes a first radio and a second radio; the first radio is configured to receive a first signal from the first base station, where the first signal includes the first differential data; and the second radio is configured to receive a second signal from the second base station, where the second signal includes the second differential data. The autonomous mobile device is configured to correct, based on the first differential data and/or the second differential data, initial coordinates of the autonomous mobile device computed based on a satellite signal to obtain device coordinates of the autonomous mobile device after correction; and control the autonomous mobile device based on the device coordinates.

An autonomous mobile device includes a housing; a traveling assembly including a traveling electric motor and traveling wheels, where the traveling assembly is coupled to the housing; a mobile station including a satellite receiving antenna, a first radio, a second radio, and a computing unit; where the satellite receiving antenna is configured to acquire a satellite signal; the first radio is configured to receive a first signal from a first base station, where the first signal includes first differential data from the first base station; the second radio is configured to receive a second signal from a second base station, where the second signal includes second differential data from the second base station; and the computing unit is configured to correct, based on the first differential data and/or the second differential data, initial coordinates of the autonomous mobile device computed based on the satellite signal to obtain device coordinates of the autonomous mobile device after correction; and a controller configured to control the autonomous mobile device based on the device coordinates output from the computing unit.

In some examples, the computing unit is configured to correct the initial coordinates based on the first differential data to obtain first device coordinates and correct the initial coordinates based on the second differential data to obtain second device coordinates; and compare a solution accuracy of the first device coordinates and a solution accuracy of the second device coordinates and select device coordinates with a higher solution accuracy as the finally output device coordinates.

In some examples, the computing unit is configured to, in the case where the first device coordinates are a fixed solution and the second device coordinates are a floating point solution, output the first device coordinates as the final device coordinates; and in the case where the first device coordinates are a floating point solution and the second device coordinates are a fixed solution, output the second device coordinates as the final device coordinates.

In some examples, the computing unit is configured to, in the case where both the first device coordinates and the second device coordinates are fixed solutions or floating point solutions, evaluate a signal quality of the first base station and a signal quality of the second base station and select device coordinates corresponding to a base station with a better signal quality as the finally output device coordinates.

In some examples, the computing unit is configured to evaluate the signal quality of the first base station based on a first common-view satellite parameter and a first communication parameter between the autonomous mobile device and the first base station and evaluate the signal quality of the second base station based on a second common-view satellite parameter and a second communication parameter between the autonomous mobile device and the second base station.

An autonomous mobile device includes a housing; a traveling assembly including a traveling electric motor and traveling wheels, where the traveling assembly is coupled to the housing; at least one radio configured to receive a radio signal from a base station, where the radio signal from the base station includes differential data from the base station; and a controller configured to acquire differential data from a network RTK service provider in the case where a communication parameter between the autonomous mobile device and the base station fails to satisfy a corresponding parameter requirement.

A working system of an autonomous mobile device includes the autonomous mobile device configured to autonomously travel and complete a task; and a base station configured to acquire satellite observation data of the base station, compute and generate differential data of the base station based on the satellite observation data of the base station, and transmit the differential data of the base station to the autonomous mobile device. The autonomous mobile device is further configured to acquire differential data from a network RTK service provider in the case where a communication parameter between the autonomous mobile device and the base station fails to satisfy a corresponding parameter requirement.

In some examples, the autonomous mobile device is configured to acquire the differential data from the network RTK service provider in the case where the communication parameter or an operation value of the communication parameter exceeds a corresponding parameter threshold.

In some examples, the communication parameter includes a distance parameter between the autonomous mobile device and the base station, and the autonomous mobile device is configured to acquire the differential data from the network RTK service provider in the case where the distance parameter or an operation value of the distance parameter exceeds a distance threshold.

In some examples, the communication parameter includes a data loss parameter between the autonomous mobile device and the base station, and the autonomous mobile device is configured to acquire the differential data from the network RTK service provider in the case where the data loss parameter or an operation value of the data loss parameter exceeds a data loss threshold.

In some examples, the communication parameter includes a common-view satellite parameter between the autonomous mobile device and the base station, and the autonomous mobile device is configured to acquire the differential data from the network RTK service provider in the case where the common-view satellite parameter or an operation value of the common-view satellite parameter does not reach a common-view threshold.

In some examples, the base station is configured to transmit the satellite observation data of the base station to the autonomous mobile device; and the autonomous mobile device is configured to obtain satellite data of base-station-visible satellites based on the satellite observation data of the base station, obtain satellite data of device-visible satellites based on satellite observation data of the autonomous mobile device, and determine the common-view satellite parameter between the autonomous mobile device and the base station based on the satellite data of the base-station-visible satellites and the satellite data of the device-visible satellites.

In some examples, the common-view satellite parameter includes the number of common-view satellites.

In some examples, the autonomous mobile device is configured to screen, based on the satellite observation data of the base station, base-station-visible satellites each having a satellite elevation angle exceeding an elevation angle threshold and a signal-to-noise ratio exceeding a signal-to-noise ratio threshold, screen, based on the satellite observation data of the autonomous mobile device, device-visible satellites each having a satellite elevation angle exceeding the elevation angle threshold and a signal-to-noise ratio exceeding the signal-to-noise ratio threshold, compare satellite numbers of the base-station-visible satellites and satellite numbers of the device-visible satellites to determine the number of common-view satellites, and acquire the differential data from the network RTK service provider in the case where the number of common-view satellites is lower than a number threshold.

In some examples, the base station is configured to acquire differential data from the network RTK service provider at an initial power-on stage, compute differential positioning coordinates of the base station based on the differential data from the network RTK service provider, stop acquiring the differential data from the network RTK service provider, store the differential positioning coordinates, and subsequently use the stored differential positioning coordinates to compute the differential data to be transmitted to the autonomous mobile device.

In some examples, the autonomous mobile device is further configured to periodically detect whether a current communication parameter satisfies the corresponding parameter requirement and, in the case where the communication parameter satisfies the corresponding parameter requirement, stop acquiring the differential data from the network RTK service provider and switch to acquiring the differential data from the base station.

In some examples, the autonomous mobile device is further configured to send verification information to the network RTK service provider so that the network RTK service provider transmits the differential data to the autonomous mobile device after performing authentication successfully, where the verification information includes identity information and a target mount point of the autonomous mobile device.

In some examples, the base station and the autonomous mobile device are provided with radios, and the base station and the autonomous mobile device interact through the radios about the differential data and/or satellite observation data of the base station.

In some examples, the autonomous mobile device is provided with an Internet communication module, and the autonomous mobile device acquires the differential data from the network RTK service provider through the Internet communication module.

A multi-base station system based on differential positioning technology includes a first base station configured to, after installation, determine first installation coordinates of the first base station and be set to a base station mode with the first installation coordinates; and a second base station configured to, after installation, be set to a mobile station mode, compute second installation coordinates of the second base station in a coordinate system of the first base station, and be set to the base station mode with the second installation coordinates.

A working system of an autonomous mobile device includes at least two base stations, where each base station of the at least two base stations is configured to acquire satellite observation data of the base station, compute and generate differential data of the base station based on the satellite observation data, and transmit the differential data to the autonomous mobile device; and the autonomous mobile device configured to autonomously travel and complete a task within a working region, where the working region includes multiple sub-regions, and each of the multiple sub-regions corresponds to one of the at least two base stations. The autonomous mobile device includes a satellite receiving antenna configured to acquire a satellite signal; and a radio configured to receive a radio signal from one of the at least two base stations. The autonomous mobile device is configured to compute device coordinates of the autonomous mobile device based on the satellite signal and the radio signal, determine a sub-region where the autonomous mobile device is currently located based on the device coordinates, and configure the radio to receive a radio signal from a base station corresponding to the sub-region where the autonomous mobile device is currently located.

In some examples, the working system further includes a charging pile; and the autonomous mobile device is configured to, at the beginning of execution of a current task, configure the radio to receive a radio signal from a base station corresponding to a sub-region where the charging pile is located within the working region.

An autonomous mobile device includes a housing; a traveling assembly including a traveling electric motor and traveling wheels, where the traveling assembly is coupled to the housing; a satellite receiving antenna configured to acquire a satellite signal; and a radio configured to receive a radio signal from a base station. The autonomous mobile device is configured to compute device coordinates of the autonomous mobile device based on the satellite signal and the radio signal, determine a sub-region where the autonomous mobile device is currently located based on the device coordinates, and configure the radio to receive a radio signal from a base station corresponding to the sub-region where the autonomous mobile device is currently located.

In some examples, the autonomous mobile device is configured to, when determining based on the device coordinates that the sub-region where the autonomous mobile device is located does not overlap another sub-region, configure the radio to receive the radio signal from the base station corresponding to the sub-region; and when determining based on the device coordinates that the sub-region where the autonomous mobile device is located overlaps another sub-region, evaluate signal qualities of base stations corresponding to sub-regions that overlap, and configure the radio to receive a radio signal from a base station with the best signal quality.

In some examples, the autonomous mobile device is configured to, in the case where a common-view satellite parameter and/or a communication parameter between the base station corresponding to the sub-region where the autonomous mobile device is currently located and the autonomous mobile device fail to satisfy a corresponding parameter requirement, configure the radio to receive a radio signal from another base station.

In some examples, the autonomous mobile device is configured to, in the case where the number of common-view satellites between the base station corresponding to the sub-region where the autonomous mobile device is currently located and the autonomous mobile device is lower than a number threshold, configure the radio to receive a radio signal from another base station.

An external device includes a display and an electronic processor configured to load and execute an intelligent mowing program. The intelligent mowing program is configured to include displaying a map of a working site of an autonomous mobile device through the display; displaying a questionnaire corresponding to the working site and collecting interaction information from a user for the questionnaire through the display; and calculating and outputting the number of base stations required within the working site based on at least the interaction information.

An external device includes a display and an electronic processor configured to load and execute an intelligent mowing program. The intelligent mowing program is configured to include displaying a map of a working site of an autonomous mobile device through the display, where the map includes at least two base stations capable of transmitting differential data to the autonomous mobile device; displaying a questionnaire corresponding to the working site and collecting interaction information from a user for the questionnaire through the display; and dividing the working site into multiple sub-regions based on at least the interaction information, where each of the multiple sub-regions corresponds to one of the at least two base stations, and the autonomous mobile device, when moving within a sub-region of the multiple sub-regions, receives differential data from a base station corresponding to the sub-region.

An external device includes a display and an electronic processor configured to load and execute an intelligent mowing program. The intelligent mowing program is configured to include displaying a map of a working site of an autonomous mobile device through the display; displaying a questionnaire corresponding to the working site and collecting interaction information from a user for the questionnaire through the display; and calculating and outputting the number of base stations required within the working site based on at least the interaction information, and/or dividing the working site into multiple sub-regions based on at least the interaction information, where each of the multiple sub-regions corresponds to one base station, and the autonomous mobile device, when moving within a sub-region of the multiple sub-regions, receives differential data from a base station corresponding to the sub-region.

In some examples, the intelligent mowing program is configured to include collecting a position range of a working region within the working site, which is marked or corrected by the user for the questionnaire.

In some examples, the intelligent mowing program is configured to include collecting a position range of an obstacle within the working site, which is marked or corrected by the user for the questionnaire.

In some examples, the intelligent mowing program is configured to include dividing the working region into the multiple sub-regions and determining a correspondence relationship between the sub-regions and base stations based on the interaction information and a signal coverage radius of the base station.

In some examples, the obstacle within the working site includes a wall; and the intelligent mowing program is configured to include dividing the working region into multiple working sections based on an extension direction of the wall and a position relationship between the wall and a region boundary of the working region.

In some examples, the intelligent mowing program is configured to include tiling preset standard figures within each working section until the working section is completely covered, and determining the number of standard figures tiled within the working section as the number of base stations required within the working section.

In some examples, the number of base stations required within the working site is a sum of numbers of base stations required within the working sections.

In some examples, the standard figures are each a regular quadrilateral or a regular hexagon.

In some examples, the length of a diagonal of each of the standard figures is twice the signal coverage radius of the base station.

In some examples, the intelligent mowing program is configured to include displaying a tiling effect of standard figures within the working site through the display.

A base station switching method of an autonomous mobile device is provided. At least a first base station and a second base station are included within a working site of the autonomous mobile device. The autonomous mobile device is provided with one radio. The base station switching method includes: within a current cycle, configuring the radio to receive a first signal from the first base station and acquiring a first common-view satellite parameter and a first communication parameter between the autonomous mobile device and the first base station based on the first signal; after the end of the current cycle, configuring the radio to receive a second signal from the second base station and acquiring a second common-view satellite parameter and a second communication parameter between the autonomous mobile device and the second base station based on the second signal; and evaluating a signal quality of the first base station based on the first common-view satellite parameter and the first communication parameter, evaluating a signal quality of the second base station based on the second common-view satellite parameter and the second communication parameter, and in the case where the signal quality of the second base station is better than the signal quality of the first base station, configuring, within the next cycle, the radio to receive the second signal from the second base station.

A base station switching method of an autonomous mobile device is provided. At least a first base station and a second base station are included within a working site of the autonomous mobile device. The autonomous mobile device is provided with a first radio and a second radio. The base station switching method includes: acquiring a satellite signal; configuring the first radio to receive a first signal from the first base station, where the first signal includes first differential data from the first base station; configuring the second radio to receive a second signal from the second base station, where the second signal includes second differential data from the second base station; correcting, based on the first differential data and/or the second differential data, initial coordinates of the autonomous mobile device computed based on the satellite signal to obtain device coordinates of the autonomous mobile device after correction; and controlling the autonomous mobile device based on the device coordinates.

A calibration method of a multi-base station system based on differential positioning technology includes: after a first base station is installed, determining first installation coordinates of the first base station, and setting the first base station to a base station mode with the first installation coordinates; and after a second base station is installed, setting the second base station to a mobile station mode, computing second installation coordinates of the second base station in a coordinate system of the first base station, and setting the second base station to the base station mode with the second installation coordinates.

A control method of an autonomous mobile device includes: in the case where a communication parameter between the autonomous mobile device and a base station satisfies a corresponding parameter requirement, acquiring differential data from the base station, where the differential data from the base station is computed by the base station based on satellite observation data after acquiring the satellite observation data and transmitted to the autonomous mobile device; and in the case where the communication parameter between the autonomous mobile device and the base station fails to satisfy the corresponding parameter requirement, acquiring differential data from a network RTK service provider.

### BRIEF DESCRIPTION OF DRAWINGS

FIG. 1 is a schematic diagram of a working system of an autonomous mobile device illustrated in an example of the present application.
FIG. 2 is a perspective view of an autonomous mobile device illustrated in an example of the present application.
FIG. 3 is an electronic control schematic of the working system of the autonomous mobile device shown in FIG. 1.
FIG. 4 is a plan view of a base station illustrated in an example of the present application.
FIG. 5 is an electronic control schematic of a working system of an autonomous mobile device illustrated in an example of the present application.
FIG. 6A is a control flowchart of switching of the autonomous mobile device to acquire differential data in the working system of the autonomous mobile device shown in FIG. 5.
FIG. 6B is another control flowchart of switching of the autonomous mobile device to acquire differential data in the working system of the autonomous mobile device shown in FIG. 5.
FIG. 6C is another control flowchart of switching of the autonomous mobile device to acquire differential data in the working system of the autonomous mobile device shown in FIG. 5.
FIG. 7 is a schematic diagram of a working system of an autonomous mobile device illustrated in another example of the present application.
FIG. 8 is an electronic control schematic of the working system of the autonomous mobile device shown in FIG. 7.
FIG. 9A is a control flowchart of selection of an optimal base station by the autonomous mobile device in the working system of the autonomous mobile device shown in FIG. 7.
FIG. 9B is another control flowchart of selection of an optimal base station by the autonomous mobile device in the working system of the autonomous mobile device shown in FIG. 7.
FIG. 10 is an electronic control schematic of a working system of an autonomous mobile device illustrated in another example of the present application.
FIG. 11A is a control flowchart of determination of device coordinates in the working system of the autonomous mobile device shown in FIG. 10.
FIG. 11B is another control flowchart of determination of device coordinates in the working system of the autonomous mobile device shown in FIG. 10.
FIG. 12 is an electronic control schematic of a working system of an autonomous mobile device illustrated in another example of the present application.
FIG. 13 is a control flowchart of an intelligent mowing program loaded and executed by an external device in the working system of the autonomous mobile device shown in FIG. 12.
FIG. 14A is a schematic diagram of division into working sections and tiling of standard figures during execution of the intelligent mowing program shown in FIG. 13 by the external device shown in FIG. 12.
FIG. 14B is another schematic diagram of division into working sections and tiling of standard figures during execution of the intelligent mowing program shown in FIG. 13 by the external device shown in FIG. 12.
FIG. 15 is a control flowchart of another intelligent mowing program loaded and executed by an external device in the working system of the autonomous mobile device shown in FIG. 12.
FIG. 16 is a schematic diagram of division into sub-regions and determination of a correspondence relationship between the sub-regions and base stations during execution of the intelligent mowing program shown in FIG. 15 by the external device shown in FIG. 12.
FIG. 17 is a flowchart of calibration of base stations in a multi-base station system illustrated in an example of the present application.

### Reference list

100/100a/100b/100c/100d working system of an autonomous mobile device
10 autonomous mobile device
20 base station
21 first base station
22 second base station
30 satellite positioning system/satellite
40 network RTK service provider
50 external device
110 housing
120traveling assembly
121traveling motor
122traveling member
130working assembly
131working motor
132working member
140controller
150mobile station
151satellite receiving antenna/antenna
152radio
1521 first radio
1522 second radio
153computing unit
160Internet communication module
210base station body
220powered module
230power supply module
510display
520electronic processor

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Hereinafter, technical solutions proposed in the present application are further described in detail in conjunction with the drawings and examples.

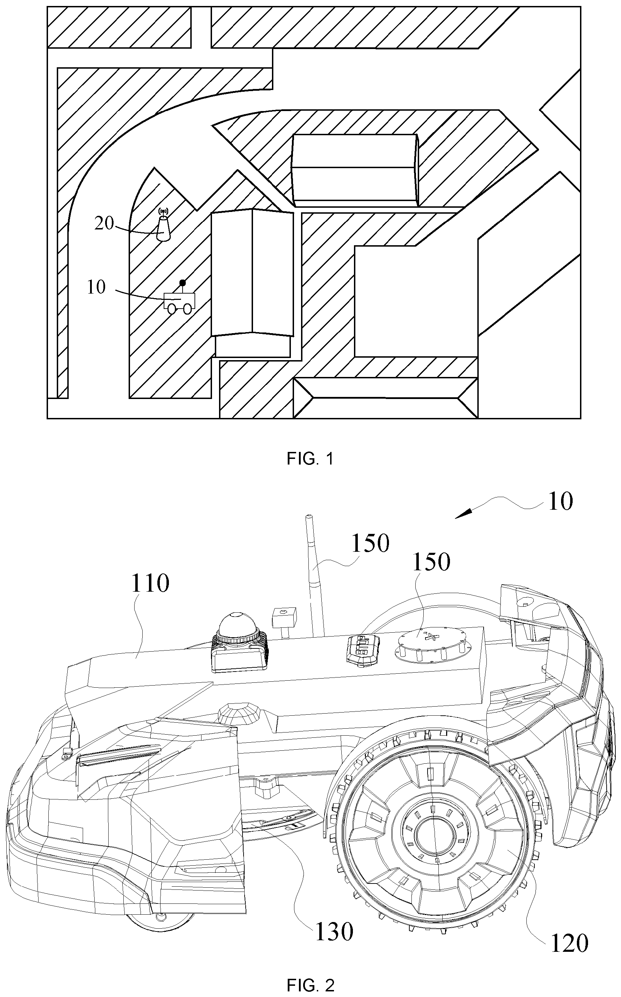

Referring to FIG. 1, a base station 20 is provided within a working site of an autonomous mobile device 10. The autonomous mobile device 10, the base station 20, and a satellite positioning system 30 (which may be simply referred to as satellite 30 in the following description and the drawings) such as the GPS or BeiDou may form a differential positioning system, that is, a working system 100 of the autonomous mobile device 10. Both the autonomous mobile device 10 moving freely within a working region and the base station 20 pre-installed at a known installation position may receive their respective satellite observation data from the satellite positioning system 30. The base station 20 may compute differential data based on the installation position and the satellite observation data and transmit the differential data to the autonomous mobile device 10. The autonomous mobile device 10 may correct an error of the satellite positioning system 30 based on the differential data and the satellite observation data and when performing various operations, implement more accurate self-positioning through differential positioning to perform navigation and obstacle avoidance. It is to be noted that one or more base stations 20 may be provided within the working site of the same autonomous mobile device 10, and the same base station 20 may serve one or more autonomous mobile devices 10 within a signal coverage range of the base station 20 or may be manually controlled to serve only particular autonomous mobile devices 10.

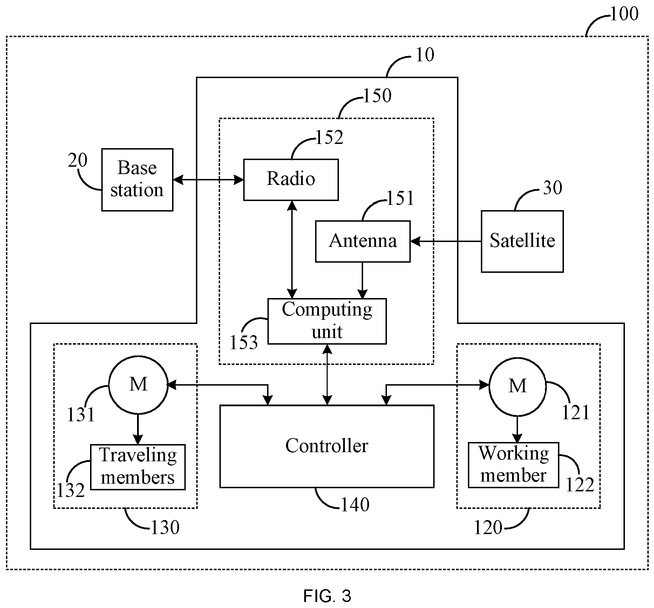

Referring to FIGS. 2 and 3, the autonomous mobile device 10 has at least a traveling assembly 120 and a working assembly 130. The traveling assembly 120 includes a traveling motor 121 and traveling members 122 such as traveling wheels, where the traveling members 122 are driven by the traveling motor. The working assembly 130 includes a working motor 131 and a working member 132 such as a mowing element or a sweeping element, where the working member 132 is driven by the working motor. Relying on the traveling assembly 120 and the working assembly 130, the autonomous mobile device 10 can autonomously travel and perform various operations such as mowing, snow throwing, sweeping, and irrigation within the working region. As shown in FIG. 2, in this example, the autonomous mobile device 10 is a smart mower or a robotic mower. In addition to the traveling assembly 120 and the working assembly 130, the autonomous mobile device 10 further includes a housing 110, a power supply unit such as a battery pack, and other components or units required to implement basic functions of the device. Additionally, as shown in FIG. 3, the autonomous mobile device 10 further includes a controller 140 and a mobile station 150 configured to implement differential positioning. The mobile station 150 includes at least a satellite receiving antenna 151 (which may be simply referred to as antenna 151 in the following description and the drawings) that interacts with the satellite positioning system 30 to receive a satellite signal, a radio 152 that interacts with the base station 20 to receive a base station signal, and a computing unit 153 that computes device coordinates of the autonomous mobile device 10. The controller 140 controls, based on the device coordinates, the traveling assembly 120 to perform navigation and obstacle avoidance and further controls the working assembly 130 to perform operations such as mowing. It is to be understood that the autonomous mobile device 10 in the present application may be a smart snow thrower, an autonomous mobile irrigation device, etc.

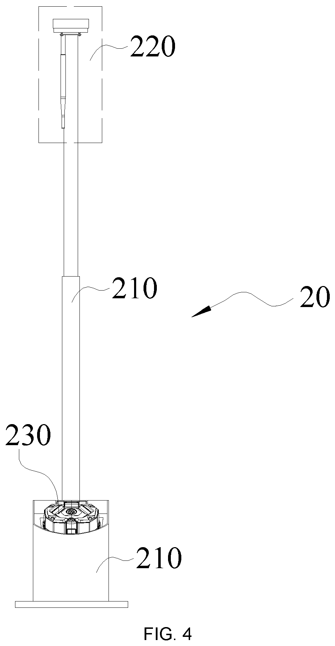

Referring to FIG. 4, the base station 20 based on the differential positioning technology in the present application may include a base station body 210 that implements support and accommodation functions, a powered module 220 for data transceiving and logical operations, and a power supply module 230 such as a battery pack, where the power supply module 230 is connected to the powered module 220 and configured to supply electrical energy to the powered module 220.

The working system of the autonomous mobile device 10 has been briefly described above. It can be found without difficulty from observation of FIG. 1 that a quality of differential positioning performed by the autonomous mobile device 10 and the base station 20 is affected by various factors. Primarily, the quality of differential positioning in the system may be embodied by a communication quality between the autonomous mobile device 10 and the base station 20. For example, the quality of differential positioning or the communication quality is not only affected by irresistible factors such as terrain and building blockage but may also be affected by uncertain factors such as pedestrian and vehicle blockage as well as the performance of a transceiving unit of the device. Moreover, in the case where a limited number of base stations 20 are provided within the working site, the base stations 20 have a limited signal coverage range.

To alleviate the abovementioned problems, ensure the differential positioning quality of the autonomous mobile device 10, and ensure that the autonomous mobile device 10 implements smooth navigation and obstacle avoidance to work normally, from one perspective, there are currently some network RTK service providers 40 that provide third-party differential positioning data. That is, a network RTK service provider 40 itself undertakes the deployment of base stations 20, and a user or device that purchases an RTK service of the network RTK service provider 40 may establish a communication connection with the network RTK service provider 40 and request, from the network RTK service provider 40, differential data for correcting a positioning error of the user or device. The autonomous mobile device 10 of the present application may use differential data provided by the base station 20 within the working site and take the differential data from the network RTK service provider 40 as an alternative. From another perspective, a greater number of base stations 20 may be provided within the working site. The autonomous mobile device 10 of the present application may evaluate and select, by itself, a base station 20 with a better data quality as a data source during movement. From yet another perspective, the number and position deployment of base stations 20 have significant effects on the communication and positioning quality in the system. The present application may provide a solution that an appropriate number of base stations and appropriate positions of the base stations are determined for the working region of the autonomous mobile device 10.

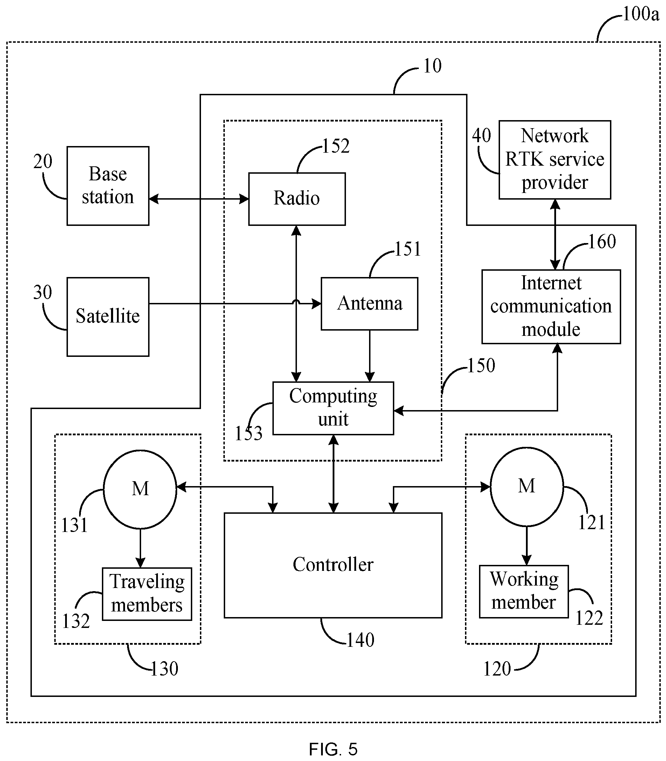

Based on the above, as shown in FIGS. 1 to 5, the present application provides a working system 100a for the autonomous mobile device 10. Similarly, the working system 100a of the autonomous mobile device 10 may include at least the autonomous mobile device 10 that travels and operates and the base station 20 that computes and sends data. The autonomous mobile device 10 may acquire the differential data from the network RTK service provider 40 in the case where a communication parameter between the autonomous mobile device 10 and the base station 20 fails to satisfy a corresponding parameter requirement. Specifically, the autonomous mobile device 10 acquires, by default, the differential data computed by the base station 20 from the base station 20 in the working system 100a. Meanwhile, the autonomous mobile device 10 may periodically or irregularly detect whether the communication parameter between the autonomous mobile device 10 and the base station 20 satisfies the corresponding parameter requirement. If the communication parameter fails to satisfy the corresponding parameter requirement during one detection, the autonomous mobile device 10 switches to using the differential data from the network RTK service provider 40, stops acquiring the differential data from the base station 20, and instead requests the differential data from the network RTK service provider 40. In some examples, the autonomous mobile device 10 is provided with the mobile station 150 including the antenna 151 and the radio 152, and the base station 20 is also provided with an antenna and a radio. The autonomous mobile device 10 and the base station 20 interact with a satellite through the antennas and interact with each other through the radios. In some other examples, the autonomous mobile device 10 is further provided with an Internet communication module 160. The autonomous mobile device 10 interacts with a network platform, node, server, etc. of the network RTK service provider 40 through the Internet communication module 160 to acquire the differential data. The Internet communication module 160 and the radio 152 may be independent in hardware or may be partially functionally related.

In some examples, the differential data of the network RTK service provider 40 is not acquired unconditionally. Only the user or device that purchases a service of the network RTK service provider 40 in advance can acquire the differential data from the network RTK service provider 40. When the autonomous mobile device 10 switches to using the differential data from the network RTK service provider 40, the autonomous mobile device 10 needs to send verification information to the network RTK service provider 40 so that the network RTK service provider 40 can perform authentication on the autonomous mobile device 10. The verification information carries at least identity information and target mount point information of the autonomous mobile device 10 and can reflect an account of the purchased network RTK service and a password and permissions thereof, etc. After the verification information is authenticated by a corresponding server, the autonomous mobile device 10 receives the differential data provided by the network RTK service provider 40.

In some examples, the autonomous mobile device 10 periodically detects whether the communication parameter between the autonomous mobile device 10 and the base station 20 satisfies the corresponding parameter requirement. In the case where the parameter satisfies the requirement, if the differential data is currently acquired from the base station 20 in the system, the autonomous mobile device 10 continues to acquire the differential data from the base station 20; if the differential data is currently acquired from the network RTK service provider 40, the autonomous mobile device 10 switches to acquiring the differential data from the base station 20 in the system 100a and stops acquiring the differential data from the network RTK service provider, so as to reduce traffic consumption and a related cost. In some examples, a detection period and/or detection standards of the communication parameter when the differential data of the base station 20 is used may be different or partially different from a detection period and/or detection standards of the communication parameter when the differential data of the network RTK service provider is used.

The communication parameter between the autonomous mobile device 10 and the base station 20 is of multiple different types and includes, but is not limited to, a distance parameter, a data loss parameter, and a common-view satellite parameter between the autonomous mobile device 10 and the base station 20. That the communication parameter fails to satisfy the corresponding parameter requirement may be that one communication parameter fails to satisfy a parameter requirement corresponding to the one communication parameter (that is, one parameter, one requirement) or may be that multiple communication parameters fail to satisfy a parameter requirement corresponding to the multiple communication parameters (that is, multiple parameters, one requirement). In some examples, if any communication parameter fails to satisfy the corresponding parameter requirement, the autonomous mobile device 10 switches a type of differential data used. In some other examples, if all the communication parameters fail to satisfy the corresponding parameter requirement, the autonomous mobile device 10 switches the type of data. In some examples, that the communication parameter fails to satisfy the corresponding parameter requirement means that any communication parameter or an operation value thereof exceeds a parameter threshold corresponding to the communication parameter. In some other examples, that the communication parameter fails to satisfy the corresponding parameter requirement includes that operation values of the multiple communication parameters exceed corresponding parameter thresholds. The autonomous mobile device 10 may switch to acquiring the differential data from the network RTK service provider 40 in the above cases.

In some examples, the autonomous mobile device 10 may acquire the differential data from the network RTK service provider 40 in the case where the distance parameter between the autonomous mobile device 10 and the base station 20 exceeds a distance threshold. The distance parameter may be a current distance between the autonomous mobile device 10 and the base station 20, an operation value thereof, or the like. For example, the operation value is an average value of distances between the autonomous mobile device 10 and the base station 20 within a current period of time. Correspondingly, the distance threshold may be a signal coverage radius of the base station 20, etc. In an example, when the current distance between the autonomous mobile device 10 and the base station 20 exceeds the signal coverage radius of the base station 20, the autonomous mobile device 10 may request the differential data from the network RTK service provider 40.

In some other examples, the autonomous mobile device 10 may acquire the differential data from the network RTK service provider 40 in the case where the data loss parameter between the autonomous mobile device 10 and the base station 20 exceeds a data loss threshold. The data loss parameter may be the number of packet losses, a packet loss rate, or a data receiving time interval between the autonomous mobile device 10 and the base station 20 within a current period of time, an operation value thereof, or the like. Correspondingly, the data loss threshold may be a packet loss number threshold, a packet loss rate threshold, a data receiving time interval threshold, or the like. In an example, when a packet loss rate between the autonomous mobile device 10 and the base station 20 in a current single communication process exceeds the packet loss rate threshold, the autonomous mobile device 10 may request the differential data from the network RTK service provider 40.

In some other examples, the autonomous mobile device 10 may acquire the differential data from the network RTK service provider 40 in the case where the common-view satellite parameter between the autonomous mobile device 10 and the base station 20 does not reach a common-view threshold. The common-view satellite parameter may be a current number of common-view satellites or a current angular coverage of common-view satellites between the autonomous mobile device 10 and the base station 20, an operation value thereof, or the like. Correspondingly, the common-view threshold may be a common-view satellite number threshold, a common-view satellite angular coverage threshold, or the like. In an example, when the current number of common-view satellites between the autonomous mobile device 10 and the base station 20 is lower than a number threshold, the autonomous mobile device 10 may request the differential data from the network RTK service provider 40. In some examples, the common-view satellites between the autonomous mobile device 10 and the base station 20 may be determined based on satellite observation data of the autonomous mobile device 10 and the base station 20 from the satellite positioning system 30. The autonomous mobile device 10 receives the satellite observation data of the autonomous mobile device 10 transmitted by the satellite positioning system 30 and receives the satellite observation data of the base station 20 forwarded by the base station 20. The satellite observation data includes data about several satellites in the satellite positioning system 30, which can be observed by the autonomous mobile device 10 at a current position or the base station 20. Data about several device-visible satellites may be obtained from the satellite observation data of the autonomous mobile device 10, and data about several base-station-visible satellites may be obtained from the satellite observation data of the base station 20. In some examples, the data may include satellite numbers, satellite coordinates, and channel signal-to-noise ratios of the device-visible satellites or the base-station-visible satellites. In an example, the autonomous mobile device 10 may determine the common-view satellites between the autonomous mobile device 10 and the base station 20 by comparing the satellite numbers of several device-visible satellites and the satellite numbers of several base-station-visible satellites. In another example, the autonomous mobile device 10 may add conditions for determining the common-view satellites. For example, the autonomous mobile device 10 may map the satellite coordinates of several device-visible satellites to a navigation coordinate system of the autonomous mobile device 10, screen out a satellite with a satellite elevation angle lower than an elevation angle threshold based on connection vectors between the device-visible satellites and the autonomous mobile device 10 in the navigation coordinate system, and further screen out a satellite with a channel signal-to-noise ratio lower than a signal-to-noise ratio threshold to finally obtain device-visible satellites each of which has a satellite elevation angle exceeding the elevation angle threshold and a channel signal-to-noise ratio exceeding the signal-to-noise ratio threshold. Similarly, base-station-visible satellites with satellite elevation angles and signal-to-noise ratios satisfying the requirements are obtained through screening. Satellite numbers of the device-visible satellites and base-station-visible satellites after screening are compared so that more accurate common-view satellites are obtained.

In some examples, the detection of the distance parameter, the data loss parameter, and the common-view satellite parameter may be performed in parallel. If any communication parameter fails to satisfy the corresponding parameter requirement, the autonomous mobile device 10 may switch to acquiring the differential data from the network RTK service provider 40. However, it is to be understood that the parameter detection may be progressive. For example, the autonomous mobile device 10 may first detect whether the distance parameter and the data loss parameter no longer satisfy the corresponding parameter requirements, detect whether the common-view satellite parameter satisfies the requirement only when both the distance parameter and the data loss parameter fail to satisfy the requirements, and in the case where the distance parameter, the data loss parameter, and the common-view satellite parameter all fail to satisfy the corresponding parameter requirements, switch to using the differential data from the network RTK service provider 40. In some other examples, the distance parameter, the data loss parameter, and the common-view satellite parameter may be comprehensively evaluated to determine whether to switch to using the differential data from the network RTK service provider 40.

In some examples, to ensure that the differential data used by the autonomous mobile device 10 is accurate, valid, consistent, and continuous, the base station 20 in the working system may, at an initial power-on stage, acquire differential data from the network RTK service provider 40 and use the differential data from the network RTK service provider 40 to correct installation coordinates of the base station stored in the base station 20 to obtain differential positioning coordinates of the base station 20. The base station 20 subsequently replaces the original installation coordinates with the differential positioning coordinates to compute differential data and transmits the differential data computed based on the differential positioning coordinates to the autonomous mobile device 10.

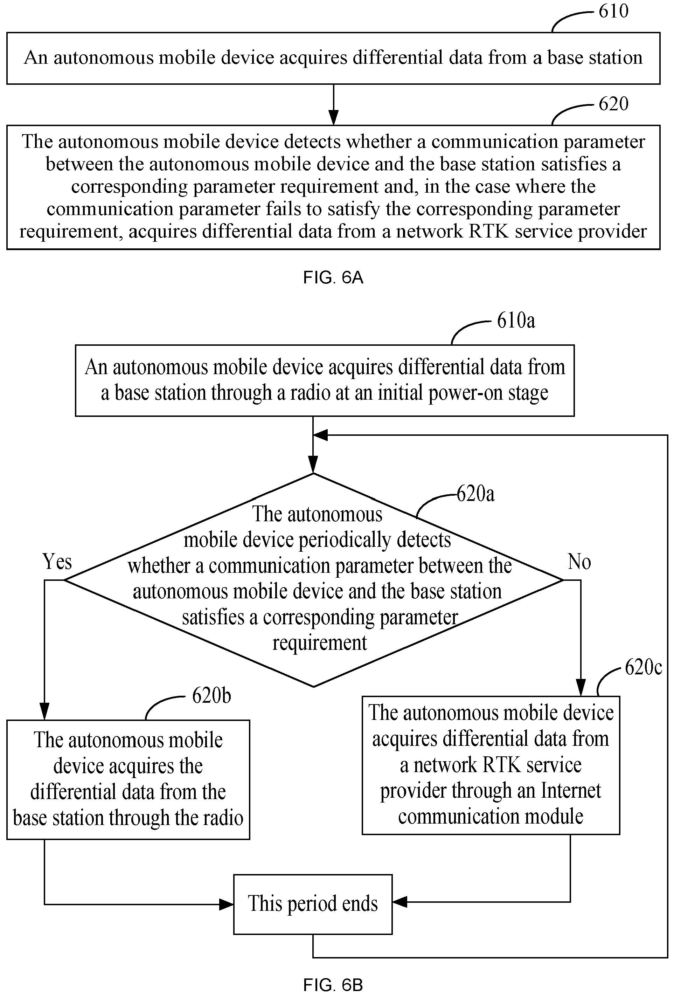

Referring to FIG. 6A, a control process of switching of the autonomous mobile device 10 in the working system 100a to acquire differential data may include the following:
In 610, the autonomous mobile device 10 acquires the differential data from the base station 20.

In 620, the autonomous mobile device 10 detects whether the communication parameter between the autonomous mobile device 10 and the base station 20 satisfies the corresponding parameter requirement and, in the case where the communication parameter fails to satisfy the corresponding parameter requirement, acquires the differential data from the network RTK service provider 40.

Referring to FIG. 6B, another control process of switching of the autonomous mobile device 10 in the preceding working system to acquire differential data may include the following:
In 610a, the autonomous mobile device 10 acquires the differential data from the base station 20 through the radio at an initial power-on stage.

In 620a, the autonomous mobile device 10 periodically detects whether the communication parameter between the autonomous mobile device 10 and the base station 20 satisfies the corresponding parameter requirement.

In 620b, in the case where the communication parameter satisfies the corresponding parameter requirement, the autonomous mobile device 10 acquires the differential data from the base station 20 in the system through the radio.

In 620c, in the case where the communication parameter fails to satisfy the corresponding parameter requirement, the autonomous mobile device 10 acquires the differential data from the network RTK service provider 40 through the Internet communication module.

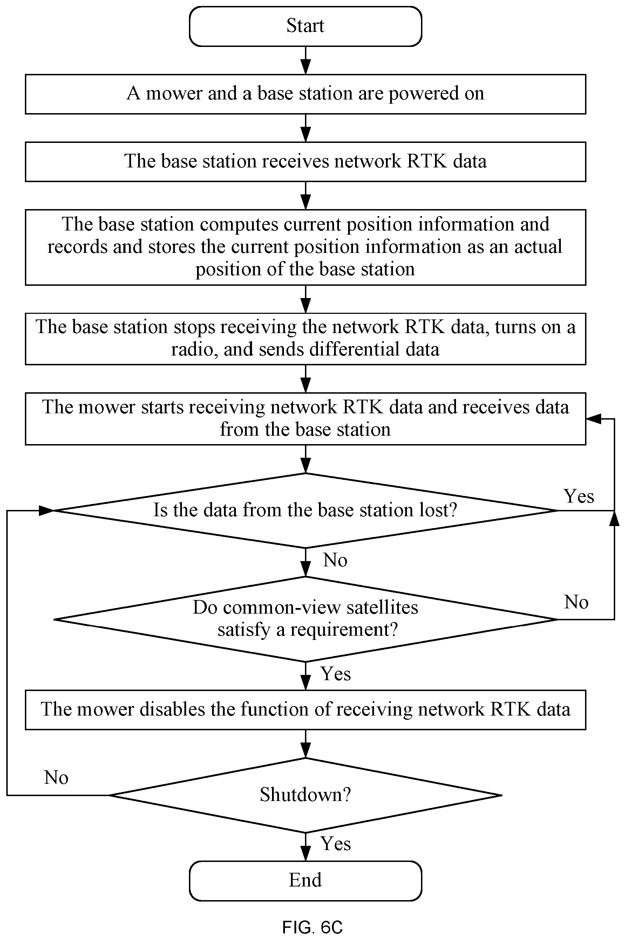

FIG. 6C shows a specific control process of switching of the autonomous mobile device 10 to acquire differential data in the working system 100a of the autonomous mobile device 10.

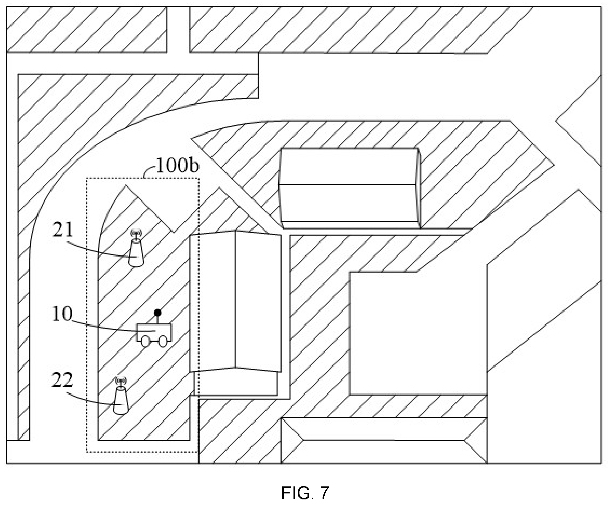

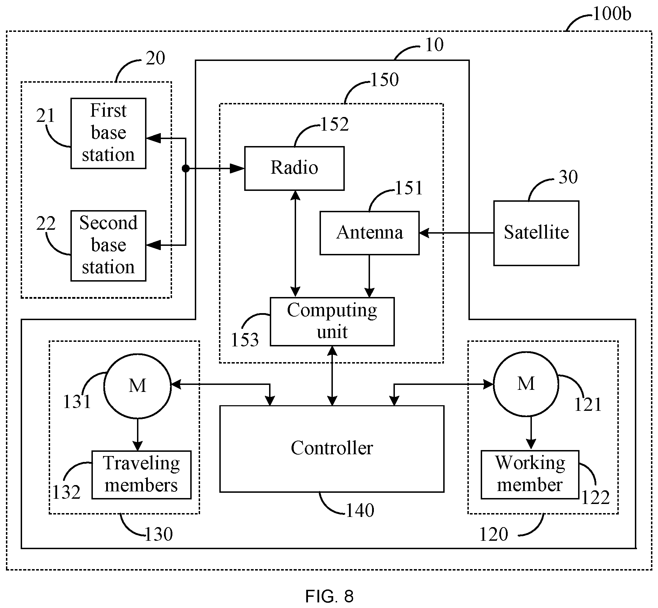

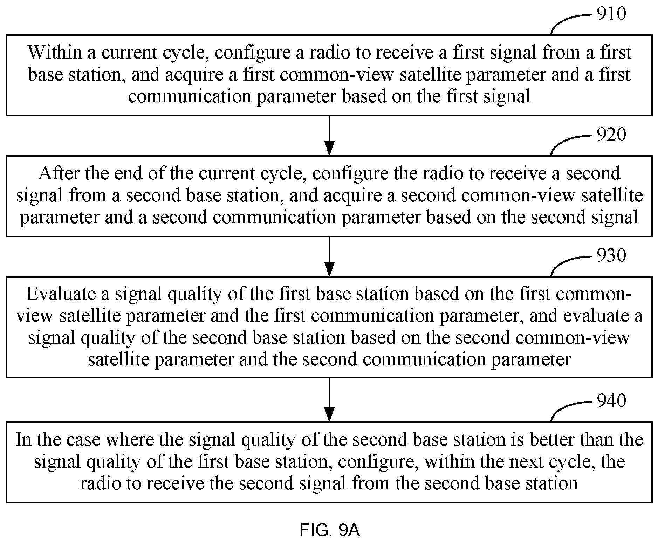

Based on the above, referring to FIGS. 7 and 8, the present application provides another working system 100b for the autonomous mobile device 10. Similarly, the working system 100b of the autonomous mobile device 10 may include at least the autonomous mobile device 10 that travels and operates and the base station 20 that computes and sends the differential data. Moreover, the working system includes at least two base stations 20: a first base station 21 and a second base station 22. The autonomous mobile device 10 includes the housing 110, the traveling assembly 120, the working assembly 130, the controller 140, and the mobile station 150. The mobile station 150 of the autonomous mobile device 10 includes the satellite receiving antenna 151 and the computing unit 153 and is provided with only one radio 152. The autonomous mobile device 10 may receive signals from different base stations 20 separately, evaluate signal qualities of the base stations, and select a base station 20 with the best signal quality to perform data interaction. Specifically, the autonomous mobile device 10 may adopt a time-slice round-robin scheme to select, based on the signal qualities of the base stations 20 within a current cycle, an optimal base station 20 that interacts with the autonomous mobile device 10 as a data source within the next cycle. An example in which the working system includes the first base station 21 and the second base station 22 is mainly used for description hereinafter. It is to be understood that the relevant scheme may be applied by analogy to a system including more base stations 20. Referring to FIG. 9A, a control process of selection of the optimal base station 20 by the autonomous mobile device 10 in the preceding working system may include the following:
In 910, within the current cycle, the radio 152 is configured to receive a first signal from the first base station 21, and a first common-view satellite parameter and a first communication parameter between the autonomous mobile device 10 and the first base station 21 are acquired based on the first signal.

In 920, after the end of the current cycle, the radio 152 is configured to receive a second signal from the second base station 22, and a second common-view satellite parameter and a second communication parameter between the autonomous mobile device 10 and the second base station 22 are acquired based on the second signal.

In 930, a signal quality of the first base station 21 is evaluated based on the first common-view satellite parameter and the first communication parameter, and a signal quality of the second base station 22 is evaluated based on the second common-view satellite parameter and the second communication parameter.

In 940, in the case where the signal quality of the second base station 22 is better than the signal quality of the first base station 21, the radio 152 is configured, within the next cycle, to receive the second signal from the second base station 22.

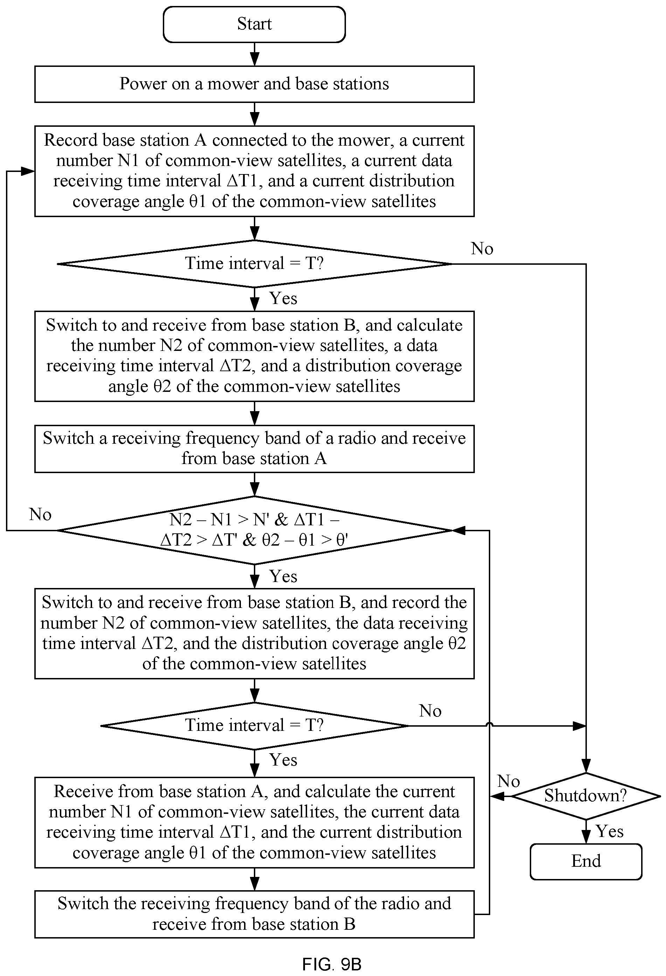

FIG. 9B shows a specific control process of selection of the optimal base station 20 by the autonomous mobile device 10 in the working system 100b of the autonomous mobile device 10.

In the preceding example, the autonomous mobile device 10 periodically selects the base station 20 for communication with the radio 152 during movement and operation. It is assumed that the above cycle is preset to T. Within the current cycle T0, that is, within a time period (t0, t0+T), the radio 152 of the autonomous mobile device 10 is configured to receive the first signal from the first base station 21. The first signal may include at least satellite observation data of the first base station 21, and the satellite observation data of the first base station 21 may include satellite numbers, satellite coordinates, and channel signal-to-noise ratios of visible satellites of the first base station 21. The first common-view satellite parameter and the first communication parameter with the first base station 21 may be obtained based on the first signal. The first common-view satellite parameter may be a parameter about common-view satellites between the first base station 21 and the autonomous mobile device 10 at a certain moment within the current cycle T0 and includes the number of common-view satellites and an angular coverage of common-view satellites. The first communication parameter may be a communication parameter between the first base station 21 and the autonomous mobile device 10 at a certain moment within the current cycle T0 and includes a distance, a packet loss rate, and a data receiving time interval.

At the end of the current cycle T0, for example, at a moment (t0+T), the radio 152 of the autonomous mobile device 10 may be configured to receive the second signal from the second base station 22. The second signal may include at least satellite observation data of the second base station 22, and the satellite observation data of the second base station 22 may include satellite numbers, satellite coordinates, and channel signal-to-noise ratios of visible satellites of the second base station 22. The second common-view satellite parameter and the second communication parameter with the second base station 22 may be obtained based on the second signal. The second common-view satellite parameter is a parameter about common-view satellites between the second base station 22 and the autonomous mapping device at the end of the current cycle T0, the moment (t0+T), and includes the number of common-view satellites and an angular coverage of common-view satellites. The second communication parameter is a communication parameter between the second base station 22 and the autonomous mobile device 10 at the moment (t0+T) and includes a distance, a packet loss rate, and a data receiving time interval. A method for determining the common-view satellites between the base station 20 and the autonomous mobile device 10 is as described above. The distance and the packet loss rate are not explained again. The data receiving time interval of the base station 20 is a time interval between two signals of the base station 20 received by the autonomous mobile device 10.

Based on the first common-view satellite parameter and the first communication parameter with the first base station 21 and the second common-view satellite parameter and the second communication parameter with the second base station 22, it may be determined whether the signal quality of the first base station 21 is better than the signal quality of the second base station 22. In principle, the greater the number of common-view satellites with the base station 20, the larger the angular coverage of the common-view satellites, and the smaller the parameters of the base station 20 such as the distance, packet loss rate, and data receiving time interval, the better the signal quality of the base station 20. In the case where the signal quality of the first base station 21 is better than the signal quality of the second base station 22, within the next cycle T1, that is, within a time period (t1, t1+T), the radio 152 of the autonomous mobile device 10 is configured to continue to receive the first signal from the first base station 21. The navigation, obstacle avoidance, mowing, and other tasks of the autonomous mobile device 10 within the next cycle T1 continue to be performed with reference to differential data provided by the first base station 21. In the case where the signal quality of the second base station 22 is better than the signal quality of the first base station 21, within the next cycle T1, that is, within the time period (t1, t1+T), the radio 152 of the autonomous mobile device 10 is configured to switch to receiving the second signal from the second base station 22. The navigation, obstacle avoidance, mowing, and other tasks of the autonomous mobile device 10 within the next cycle T1 are performed with reference to differential data provided by the second base station 22. In some examples, t1 is (t0+T).

In some examples, if a difference between the second common-view satellite parameter with the second base station 22 and the first common-view satellite parameter with the first base station 21 exceeds a first threshold, and a difference between the first communication parameter with the first base station 21 and the second communication parameter with the second base station 22 exceeds a second threshold, it may be determined that the signal quality of the second base station 22 is better than the signal quality of the first base station 21. Specifically, if a difference (N2-N1) between the number N2 of second common-view satellites between the second base station 22 and the autonomous mobile device 10 and the number N1 of first common-view satellites between the first base station 21 and the autonomous mobile device 10 exceeds a threshold N', a difference (θ2-θ1) between an angular coverage θ2 of the second common-view satellites between the second base station 22 and the autonomous mobile device 10 and a angular coverageθ1 of the first common-view satellites between the first base station 21 and the autonomous mobile device 10 exceeds a threshold θ', and a difference (ΔT1-ΔT2) between a data receiving time interval ΔT1 of the first base station 21 and a data receiving time interval ΔT2 of the second base station 22 exceeds a threshold ΔT', it may be determined that the signal quality of the second base station 22 is better than the signal quality of the first base station 21. In some other examples, among the three conditions that the difference in the number of common-view satellites exceeds the threshold, that the difference in the angular coverage of the common-view satellites exceeds the threshold, and that the difference in the data receiving time interval exceeds the threshold, if two conditions are satisfied, it may be determined that the signal quality of the second base station 22 is better than the signal quality of the first base station 21. In some other examples, which one of the signal quality of the first base station 21 and the signal quality of the second base station 22 is better may be determined by comprehensively considering the above three factors. For example, a weighted sum of the difference in the number of common-view satellites, the difference in the angular coverage of the common-view satellites, and the difference in the data receiving time interval may be calculated. If S = k1 × (N2 - N1) + k2 × (θ2 - θ1) + k3 × (ΔT1 - ΔT2) exceeds a threshold S', it may be determined that the signal quality of the second base station 22 is better than the signal quality of the first base station 21.

In some examples, at the initial power-on stage, the autonomous mobile device 10 receives by default the first signal from the first base station 21. The first base station 21 may be a base station 20 that each autonomous mobile device 10 accepts by default, for example, a base station 20 closest to a charging pile or a base station 20 closest to the autonomous mobile device 10 at the initial power-on stage.

In some examples, communication frequency bands of the first base station 21 and the second base station 22 are different. The radio 152 of the autonomous mobile device 10 is configured to enable a corresponding frequency band to receive the first signal from the first base station 21 or the second signal from the second base station 22.

In some examples, the working system of the autonomous mobile device 10 further includes a third base station 23. At the end of the current cycle, the radio 152 of the autonomous mobile device 10 may be configured to receive the second signal from the second base station 22 and a third signal from the third base station 23, respectively. The second common-view satellite parameter and the second communication parameter with the second base station 22 may be obtained based on the second signal, a third common-view satellite parameter and a third communication parameter with the third base station 23 may be obtained based on the third signal, and the optimal base station 20 may be selected based on the first, second, and third common-view satellite parameters and the first, second, and third communication parameters. The same is applied by analogy to a working system including more base stations 20, and the details are not repeated.

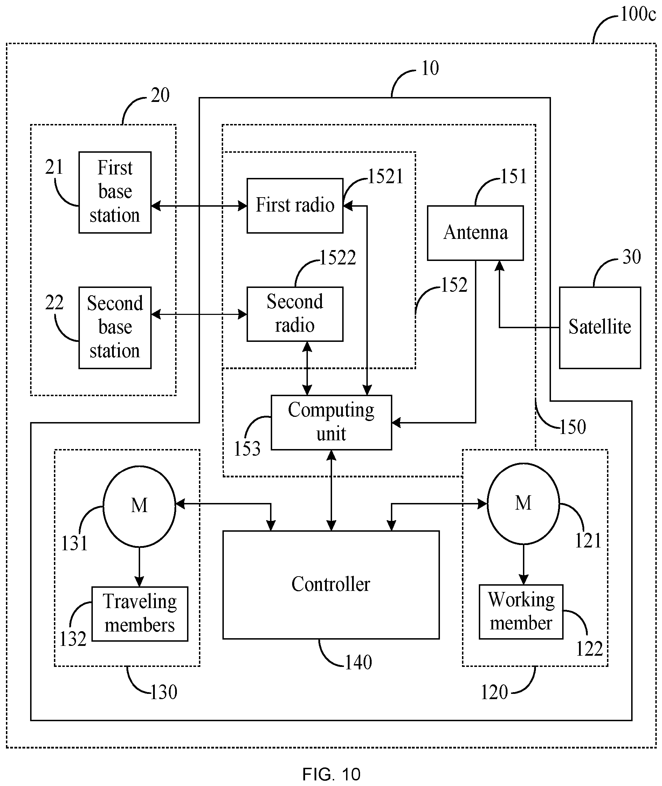

Correspondingly, referring to FIG. 10, a working system 100c of the autonomous mobile device 10 still includes two base stations 20: the first base station 21 and the second base station 22. The autonomous mobile device 10 includes the housing 110, the traveling assembly 120, the working assembly 130, the controller 140, and the mobile station 150. The mobile station 150 of the autonomous mobile device 10 includes the satellite receiving antenna 151 and the computing unit 153 and is provided with two radios 152: a first radio 1521 and a second radio 1522. The autonomous mobile device 10 may be provided with the two radios 152 to receive signals from the two base stations 20 one to one. The first radio 1521 receives a first signal from the first base station 21, and the first signal may include first differential data computed by the first base station 21. The second radio 1522 receives a second signal from the second base station 22, and the second signal may include second differential data computed by the second base station 22. The satellite receiving antenna 151 may receive a satellite signal from the satellite positioning system 30 to acquire satellite observation data of the autonomous mobile device 10. The computing unit 153 may correct, using the first differential data obtained by the first radio 1521 or the second differential data obtained by the second radio 1522, initial coordinates of the mobile station 150 obtained based on the satellite observation data to obtain device coordinates of the autonomous mobile device 10, that is, differential positioning coordinates of the mobile station 150. The controller 140 subsequently controls the traveling assembly 120 and/or the working assembly 130 based on the device coordinates of the autonomous mobile device 10 to perform navigation, obstacle avoidance, mowing, etc.

In some examples, the computing unit 153 in the mobile station 150 of the autonomous mobile device 10 corrects the initial coordinates of the mobile station 150 using the first differential data from the first base station 21 to obtain first device coordinates, corrects the initial coordinates of the mobile station 150 using the second differential data from the second base station 22 to obtain second device coordinates, compares a solution accuracy of the first device coordinates and a solution accuracy of the second device coordinates, and selects coordinates with a higher solution accuracy as the device coordinates finally output to the controller 140 for subsequent reference. Specifically, when coordinates are computed using the differential positioning technology, possible solutions obtained include a fixed solution, a floating point solution, and a single point solution which are from high to low in sequence in solution accuracy. The computing unit 153 may select device coordinates with the higher solution accuracy as output according to a type of a solution obtained when the device coordinates are computed. In some examples, if the first device coordinates are a fixed solution and the second device coordinates are a floating point solution, the computing unit 153 outputs the first device coordinates to the controller 140 for subsequent use. In some other examples, if the first device coordinates are a floating point solution and the second device coordinates are a fixed solution, the computing unit 153 outputs the second device coordinates to the controller 140. According to the high or low accuracy of each type of solution described above, similar inferences may be made in other cases.

In some other examples, in the case where the first device coordinates and the second device coordinates have the same solution accuracy, for example, in the case where the first device coordinates and the second device coordinates are both fixed solutions or floating point solutions, the computing unit 153 may evaluate the signal quality of the first base station 21 based on the first signal, evaluate the signal quality of the second base station 22 based on the second signal, and select device coordinates obtained using differential data from the base station 20 with the better signal quality. In some examples, the computing unit 153 may obtain the first common-view satellite parameter and the first communication parameter with the first base station 21 based on the first signal, obtain the second common-view satellite parameter and the second communication parameter with the second base station 22 based on the second signal, and determine, based on the first and second common-view satellite parameters and the first and second communication parameters, the base station 20 with the better signal quality between the first base station 21 and the second base station 22. The related evaluation method is similar to the preceding evaluation of signal qualities in the case of a single radio. In some other examples, in the case where the first device coordinates and the second device coordinates have the same solution accuracy, an average value of differences between the first device coordinates and the second device coordinates within a certain period of time may be calculated, and the average value of differences may be used to correct device coordinates corresponding to a secondary base station with a worse signal quality.

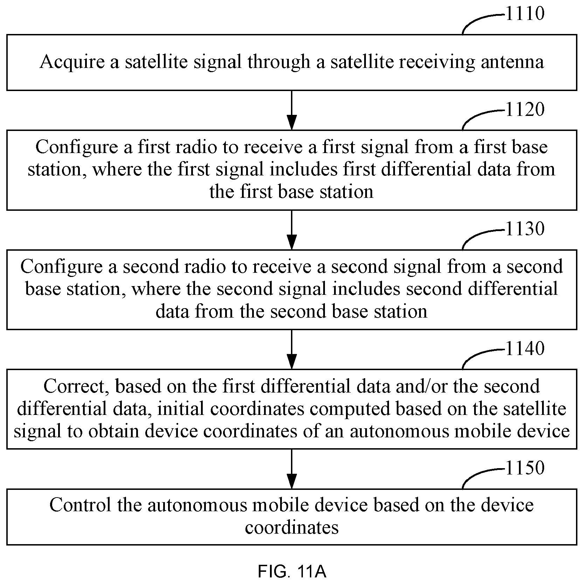

Referring to FIG. 11A, a control process of determination of device coordinates by the autonomous mobile device 10 in the preceding working system may include the following:
In 1110, the satellite signal is acquired through the satellite receiving antenna 151.

In 1120, the first radio 1521 is configured to receive the first signal from the first base station 21, where the first signal includes the first differential data from the first base station 21.

In 1130, the second radio 1522 is configured to receive the second signal from the second base station 22, where the second signal includes the second differential data from the second base station 22.

In 1140, the initial coordinates of the autonomous mobile device 10 computed based on the satellite signal are corrected based on the first differential data and/or the second differential data to obtain device coordinates of the autonomous mobile device 10 after correction.

In 1150, the autonomous mobile device 10 is controlled based on the device coordinates.

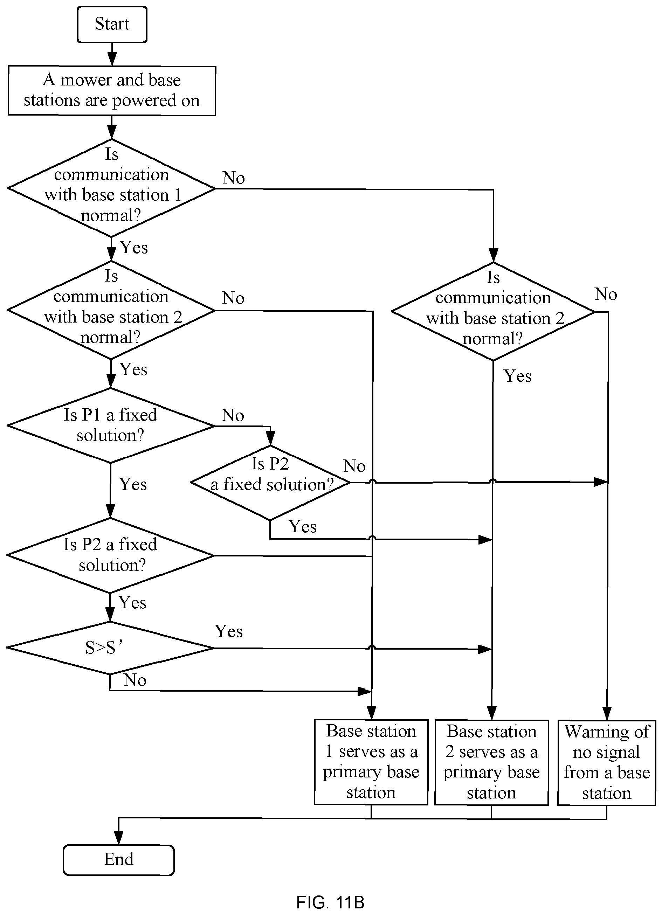

FIG. 11B shows a specific control process of determination of device coordinates by the autonomous mobile device 10.

It is to be understood that in the preceding examples, the control schemes may be executed by the autonomous mobile device 10. However, in some examples, the autonomous mobile device 10 may transmit signals of the base station 20 to an external device 50 so that the external device 50 can evaluate the signal quality of the base station and feed the optimal base station 20 to be selected back to the autonomous mobile device 10.

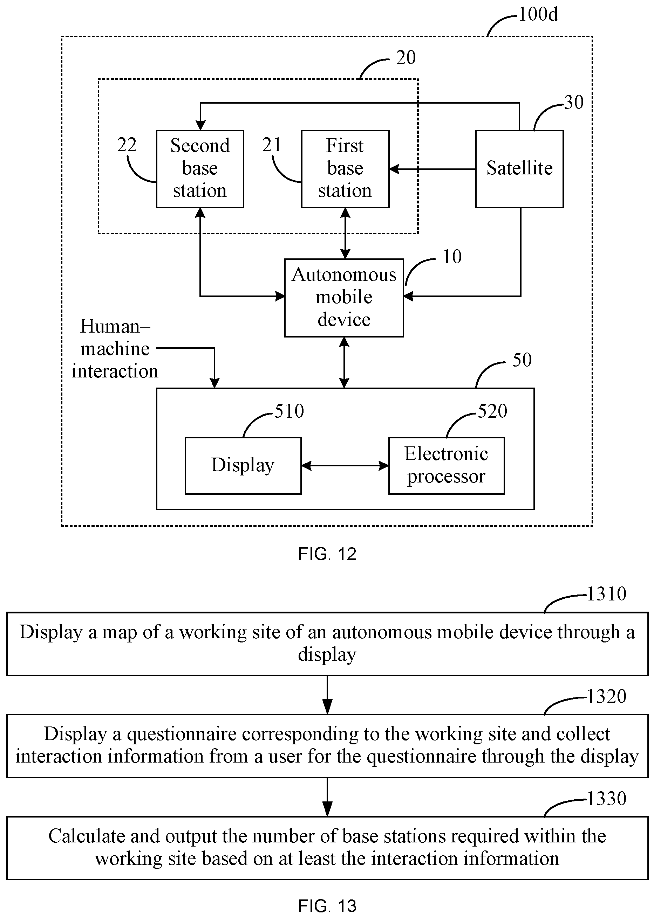

Based on the above, referring to FIG. 12, the present application provides another working system 100d for the autonomous mobile device 10. To adapt to some optimization requirements, in addition to the autonomous mobile device 10 and the base station 20, the working system of the autonomous mobile device 10 may further include an external device 50. The external device 50 may be a user device such as a smartphone, a tablet computer, or a portable computer or may be a server or a server cluster, such as a cloud platform, which performs unified management on the autonomous mobile device 10 and/or the base station 20.

As shown in FIG. 12, the external device 50 may include at least a display 510 and an electronic processor 520. The display 510 is electrically or communicatively connected to the electronic processor 520. The electronic processor 520 may invoke the display 510. Referring to FIG. 13, the electronic processor 520 may also load and execute the following intelligent mowing program denoted as a first intelligent mowing program.

In 1310, a map of the working site of the autonomous mobile device 10 is displayed through the display 510.

In 1320, a questionnaire corresponding to the working site is displayed and interaction information from a user for the questionnaire is collected through the display 510.

In 1330, the number of base stations 20 required within the working site is calculated and output based on at least the interaction information.

In the preceding example, the electronic processor 520 of the external device 50 invokes the display 510 to display the map of the working site of the autonomous mobile device 10 and the questionnaire corresponding to the working site. The working site may cover the working region and generally includes some information outside the working region and in the vicinity of the working region. The map may reflect at least information such as positions and contours of objects within the working site of the autonomous mobile device 10. In some cases, the map may be a real-scene mapping of the working site of the autonomous mobile device 10, such as a satellite map. The questionnaire corresponding to the working site may request, in various manners such as image, text, audio, and video, the user to give answers to particular questions. In response to various operations of the user, such as touching, clicking, and file input, the electronic processor 520 may collect the interaction information from the user for the questionnaire.

In some examples, the interaction information that the electronic processor 520 requests through the questionnaire and collects in response to the operations of the user includes a position range of the working region within the working site, which is marked or corrected by the user, that is, boundary information of the working region. In some other examples, the interaction information includes a position range of an obstacle within the working site, which is marked or corrected by the user. In some examples, the obstacle includes a wall. In some other examples, the interaction information such as the position range of the working region and/or the position range of the obstacle is collected after the user performs operations such as outlining, touching, and clicking on the map of the working site displayed on the display 510.

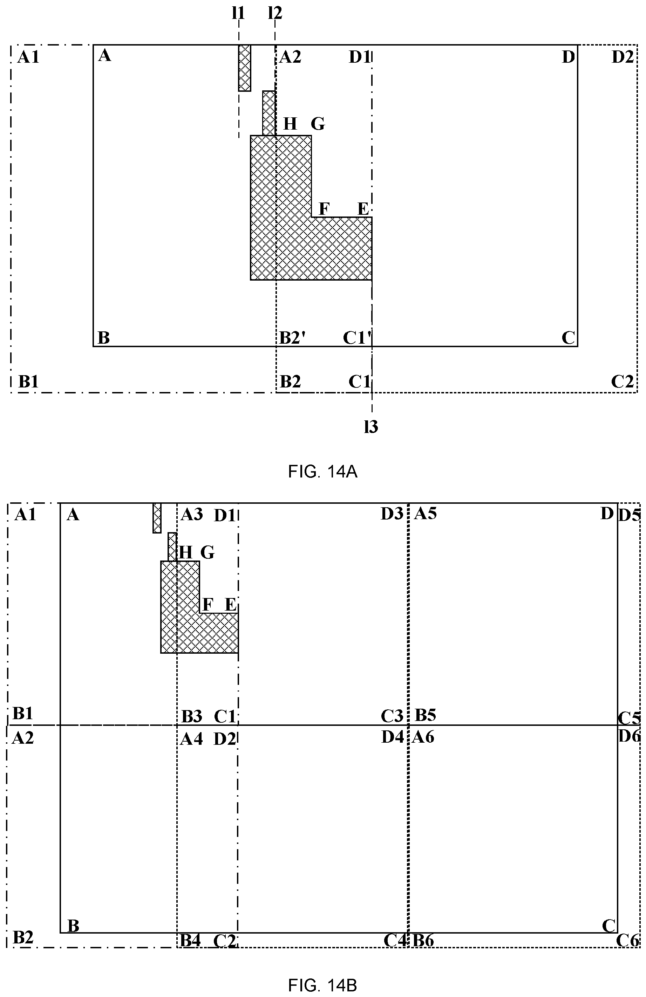

In some examples, when the electronic processor 520 calculates and outputs the number of base stations 20 required within the working site based on the interaction information, the electronic processor 520 may divide the working region into multiple working sections based on the position range of the working region and the position range of the obstacle and determine the number of base stations 20 required within the working region based on the working sections divided into. The goal of division into the working sections is to cover the working region of the autonomous mobile device 10 and make the number as small as possible. Additionally, the goal of division into the working sections is to make the same section basically have no obstacles to facilitate the subsequent determination of the number of base stations 20 required within the section based on the signal coverage range of the base station 20. Alternatively, the goal of division into the working sections is to basically balance the areas of the sections. In some examples, the electronic processor 520 may divide the working region of the autonomous mobile device 10 into the multiple working sections based on the lengths and positions of region boundaries, edge positions of the obstacle such as the wall, and the like. In an example, referring to FIG. 14A, edge lines among edges of obstacles such as walls and parallel to relatively short region boundaries may be determined. For example, the edge lines in FIG. 14A include l1, l2, and l3. Then, parallel line spacings between each edge line of the obstacles and the relatively short region boundaries may be determined. A region between each edge line and a region boundary with a greater spacing from the edge line is a candidate section corresponding to the edge line. Among candidate sections corresponding to the edge lines, multiple candidate sections whose combination can cover the entire working region and which have the smallest overlapping area are determined as the working sections. In principle, the number of working sections should be as small as possible, the working section does not include a region occupied by the obstacle such as the wall, and the same working section is not partitioned by the region occupied by the obstacle such as the wall. For example, in FIG. 14A, the working region may be divided into a working section A-B-C1'-E-F-G-H-A2' obtained from the edge line l3 and a working section A2-H-G-F-E-C1'-C-D obtained from the edge line l2. In some other examples, the electronic processor 520 may determine, according to an adjacency relationship between the obstacle such as the wall and the working region, whether the division into the working sections is performed based on the obstacle. For example, in the case where only two adjacent edges of a building abut the working region, the confirmation of the edge lines and the division into sections may not be performed based on this building. That is, some buildings that are not located inside the working region and do not partition the same working section are not involved in the division into sections.

In some examples, after the working sections are obtained through division, the electronic processor 520 may tile standard figures within each working section until the working section is completely covered. The number of standard figures tiled within the working section is the number of base stations 20 required within the working section. In some examples, the above standard figure is a regular quadrilateral or a regular hexagon. In some other examples, the length of a diagonal of the above standard figure is twice the signal coverage radius of the base station 20. In an example, in the case where the signal coverage radius of the base station 20 is a, the above standard figure is a regular quadrilateral whose diagonal has a length of 2a. For example, in FIG. 14A, two standard figures may be tiled within the working region, that is, a standard figure A1-B1-C1-D1 tiled under the working section A-B-C1'-E-F-G-H-A2 and a standard figure A2-B2-C2-D2 tiled under the working section A2-H-G-F-E-C1'-C-D; in FIG. 14B, six standard figures may be tiled within the working region.

In some examples, the electronic processor 520 may determine the number of base stations 20 required within the working region of the autonomous mobile device 10 based on the standard figures tiled within the working sections. In some examples, the number of base stations 20 to be deployed within the working region of the autonomous mobile device 10 is a sum of numbers of standard figures tiled within the working sections. In some other examples, a standard figure repeatedly laid on an overlapping area of multiple working sections may be screened out, and the number of base stations 20 to be deployed within the working region of the autonomous mobile device 10 is less than the sum of the numbers of standard figures tiled within the working sections.

In some examples, when the electronic processor 520 loads and executes the first intelligent mowing program, the electronic processor 520 further invokes the display 510 to display a tiling effect diagram of the standard figures tiled within the working region in the working site of the autonomous mobile device 10.

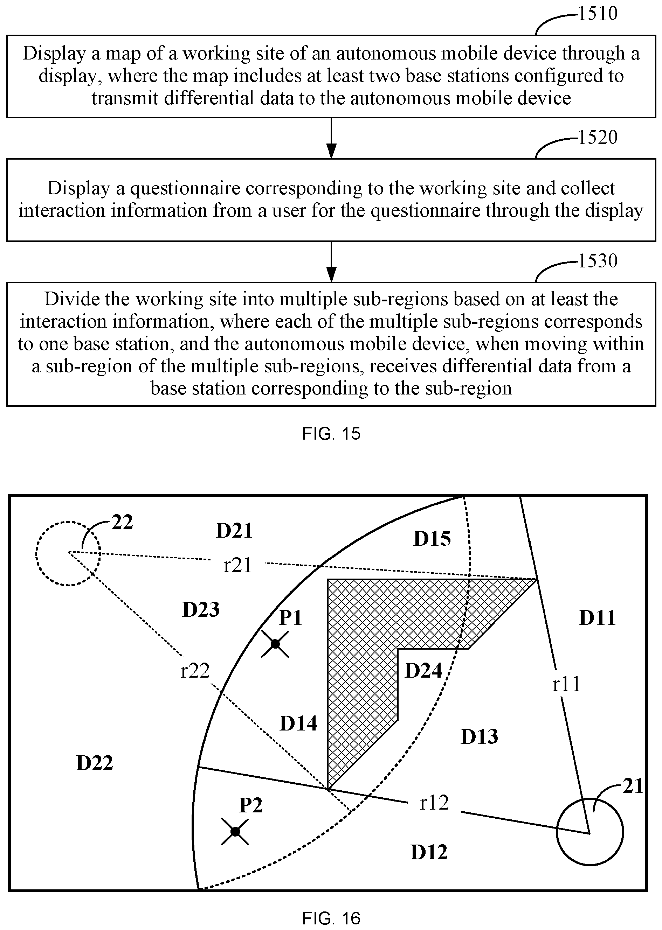

As shown in FIG. 12, the external device 50 may include at least the display 510 and the electronic processor 520. The display 510 is electrically or communicatively connected to the electronic processor 520. The electronic processor 520 may invoke the display 510. Referring to FIG. 15, the electronic processor 520 may also load and execute the following intelligent mowing program denoted as a second intelligent mowing program.

In 1510, the map of the working site of the autonomous mobile device 10 is displayed through the display 510, where the map includes at least two base stations 20 configured to transmit differential data to the autonomous mobile device 10.

In 1520, the questionnaire corresponding to the working site is displayed and the interaction information from the user for the questionnaire is collected through the display 510.

In 1530, the working site is divided into multiple sub-regions based on at least the interaction information, where each of the multiple sub-regions corresponds to one base station 20 of the at least two base stations 20, and the autonomous mobile device 10, when moving within a sub-region of the multiple sub-regions, receives differential data from a base station 20 corresponding to the sub-region.

In the preceding example, the electronic processor 520 of the external device 50 invokes the display 510 to display the map of the working site of the autonomous mobile device 10 and the questionnaire corresponding to the working site. Similarly, the map may reflect at least the information such as the positions and the contours of the objects within the working site of the autonomous mobile device 10. In some cases, the map may be the real-scene mapping of the working site of the autonomous mobile device 10, such as the satellite map. Additionally, the map further includes information about the at least two base stations 20 configured to transmit differential data to the autonomous mobile device 10. The questionnaire corresponding to the working site may request, in various manners such as image, text, audio, and video, the user to give the answers to the particular questions. In response to various operations of the user, such as touching, clicking, and file input, the electronic processor 520 may collect the interaction information from the user for the questionnaire.

In some examples, the interaction information that the electronic processor 520 requests through the questionnaire and collects in response to the operations of the user includes the position range of the working region within the working site, which is marked or corrected by the user, that is, the boundary information of the working region. In some other examples, the interaction information includes the position range of the obstacle within the working site, which is marked or corrected by the user. In some examples, the obstacle includes the wall. In some other examples, the interaction information such as the position range of the working region and/or the position range of the obstacle is collected after the user performs the operations such as outlining, touching, and clicking on the map of the working site displayed on the display 510.

In some examples, the electronic processor 520 may divide the working site into the multiple sub-regions and determine a correspondence relationship between each sub-region and one base station 20 of the at least two base stations 20 based on the interaction information and the signal coverage radius of each base station 20. Specifically, the electronic processor 520 may determine the installation position of each base station 20 based on the map. Under the limitation of region boundaries, with the installation position of the base station 20 as the center and the signal coverage radius of the base station 20 as the radius, a circle is drawn so that a signal coverage range of each base station 20 within the working site is determined. In the case where the obstacle such as the wall exists within the signal coverage range of the base station 20, the signal coverage range of the base station 20 is divided by two radii that intersect with the obstacle and form a largest angle. Then, several corresponding sub-regions are obtained based on the signal coverage range of the base station 20, and among the several sub-regions, a sub-region any line from which to the installation position of the base station 20 is not blocked by the obstacle has a correspondence relationship with the base station 20. Referring to FIG. 16, a signal coverage range of the first base station 21 is divided by radii r11 and r12 into sub-regions D11 to D15, and sub-regions D11 to D13 have the correspondence relationship with the first base station 21. Similarly, as shown in FIG. 16, a signal coverage range of the second base station 22 is divided by radii r21 and r22 into sub-regions D21 to D24, and sub-regions D21 to D23 have the correspondence relationship with the second base station 22.

It is to be noted that in some examples, some of the multiple sub-regions may correspond to the same base station 20. For example, sub-regions D11 and D13 both correspond to the first base station 21, and sub-regions D21 and D22 both correspond to the second base station 22. In some examples, some of the multiple sub-regions may overlap each other. For example, sub-region D12 is generated based on the signal coverage range of the first base station 21, sub-region D22 is generated based on the signal coverage range of the second base station 22, and sub-region D12 partially overlaps sub-region D22. In some examples, a position point within the working site may belong to different sub-regions but correspond to only one base station 20. For example, position point P1 belongs to sub-region D14 generated based on the signal coverage range of the first base station 21 and sub-region D23 generated based on the signal coverage range of the second base station 22. However, since a direction from position point P1 to the first base station 21 is blocked by the obstacle, sub-region D14 has no correspondence relationship with the first base station 21. A direction from position point P1 to the second base station 22 is not blocked by the obstacle, and therefore, sub-region D23 has a correspondence relationship with the second base station 22. In some examples, a position point within the working site may belong to different sub-regions and correspond to different base stations 20. For example, position point P2 belongs to sub-region D12 generated based on the signal coverage range of the first base station 21 and sub-region D22 generated based on the signal coverage range of the second base station 22. Moreover, since directions from position point P2 to the first and second base stations 20 are not blocked by the obstacle, sub-region D12 has a correspondence relationship with the first base station 21, and sub-region D22 has a correspondence relationship with the second base station 22.

In some examples, in the preceding working system, after the external device 50 completes the division into the sub-regions and the correspondence between the sub-regions and the base stations 20, the mobile station 150 of the autonomous mobile device 10, which is provided with a single radio, may preliminarily compute the initial coordinates of the autonomous mobile device 10 based on the satellite signal including the satellite observation data of the autonomous mobile device 10 and received through the satellite receiving antenna and determine, based on a sub-region to which the initial coordinates belong and a base station 20 corresponding to the sub-region, a base station 20 to be selected by the autonomous mobile device 10 at the current position.

In some examples, if the initial coordinates belong to only one sub-region, the base station 20 corresponding to this sub-region is determined to be selected, and differential data from this base station 20 is used to correct the initial coordinates to obtain the differential positioning coordinates, that is, the device coordinates.

In some other examples, if the initial coordinates belong to multiple sub-regions and only one of the multiple sub-regions corresponds to a base station 20, for example, the initial coordinates belong to sub-regions D14 and D23 and only sub-region D23 has a correspondence relationship with the second base station 22, the second base station 22 with the correspondence relationship is selected, and the differential data from the second base station 22 is used to correct the initial coordinates to obtain the device coordinates. In some other examples, if the initial coordinates belong to multiple sub-regions and the multiple sub-regions correspond to different base stations 20, for example, the initial coordinates belong to sub-regions D12 and D22, sub-region D12 has the correspondence relationship with the first base station 21, and sub-region D22 has the correspondence relationship with the second base station 22, the autonomous mobile device 10 may configure the radio to receive the first signal from the first base station 21 and the second signal from the second base station 22 respectively to determine the first common-view satellite parameter and the first communication parameter between the autonomous mobile device 10 and the first base station 21 and the second common-view satellite parameter and the second communication parameter between the autonomous mobile device 10 and the second base station 22, evaluate the signal quality of the first base station 21 and the signal quality of the second base station 22 based on these parameters, and select the base station 20 with the better signal quality. The related method is as described above, and the details are not repeated here.

In some examples, after the current initial coordinates are corrected by using the differential data used for the previous computation of the device coordinates, it may be determined which sub-region the position point of the autonomous mobile device 10 at the current moment belongs to.

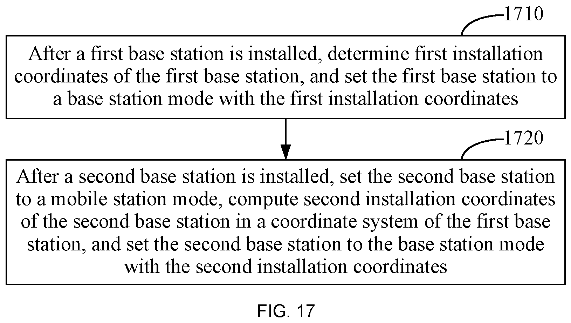

Based on the above, in the case where multiple base stations 20 are provided within the working site of the autonomous mobile device 10, and during movement and operation, the autonomous mobile device 10 switches between different base stations 20 to use differential data from the different base stations 20, the multiple base stations 20 form a multi-base station system based on the differential positioning technology. Each base station 20 is installed at a respective fixed installation position. To ensure that data is accurate, valid, consistent, and continuous during movement and operation of the autonomous mobile device 10, the multi-base station system requires the calibration of the multiple base stations 20. An example in which the multi-base station system includes the first base station 21 and the second base station 22 is used for description hereinafter. It is to be understood that the relevant scheme may be applied by analogy to a system including more base stations 20. Referring to FIG. 17, a control process of calibration of base stations 20 in the multi-base station system may include the following:
In 1710, after the first base station 21 is installed, first installation coordinates of the first base station 21 are determined, and the first base station 21 is set to a base station mode with the first installation coordinates.

In 1720, after the second base station 22 is installed, the second base station 22 is set to a mobile station mode, second installation coordinates of the second base station 22 in a coordinate system of the first base station 21 are computed, and the second base station 22 is set to the base station mode with the second installation coordinates.

In the preceding example, after the first base station 21 is installed at the corresponding installation position within the site of the autonomous mobile device 10, the first installation coordinates of the first base station 21 may be determined, and then the first base station 21 may be set to the base station mode with the first installation coordinates. In some examples, the first installation coordinates are not acquired manually. For example, the first base station 21 itself may compute the first installation coordinates in a manner such as Precise Point Positioning (PPP) convergence or single-point convergence. In another example, the first base station 21 may be set to the mobile station mode and the first installation coordinates may be computed through network RTK. In some other examples, the first installation coordinates may be manually set.

Then, the second base station 22 is installed at the corresponding installation position within the site, the second base station 22 is set to the mobile station mode, and differential positioning coordinates of the second base station 22 are computed based on differential data from the first base station 21. That is, the second installation coordinates of the second base station 22 in the coordinate system of the first base station 21 are acquired, and the second base station 22 is set to the base station mode with the second installation coordinates. The mobile station mode differs from the base station mode in that the mobile station 150 changes in position and may compute its differential positioning coordinates based on satellite observation data and differential data, and the base station 20 is fixed in position and may compute differential data for use of the mobile station 150 based on satellite observation data and the fixed installation position.

In some examples, the multi-base station system may further include a third base station. After the third base station is installed at a corresponding installation position within the site, the third base station may be set to the mobile station mode, and differential positioning coordinates of the third base station may be computed based on the differential data from the first base station 21. That is, third installation coordinates of the third base station in the coordinate system of the first base station 21 are acquired, and the third base station is set to the base station mode with the third installation coordinates. The same is applied by analogy to a system including more base stations 20, and the details are not repeated.

In some examples, after each base station 20 is set to the base station mode, the base station 20 needs to be restarted.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A working system of an autonomous mobile device, comprising:
the autonomous mobile device configured to autonomously travel and complete a task;
a first base station configured to compute and generate first differential data; and
a second base station configured to compute and generate second differential data;
wherein the autonomous mobile device comprises a controller and at least one radio; and
the controller is configured to, within a current cycle, configure the radio to receive a first signal from the first base station and acquire a first common-view satellite parameter and a first communication parameter between the autonomous mobile device and the first base station based on the first signal;
after an end of the current cycle, configure the radio to receive a second signal from the second base station and acquire a second common-view satellite parameter and a second communication parameter between the autonomous mobile device and the second base station based on the second signal; and
evaluate a signal quality of the first base station based on the first common-view satellite parameter and the first communication parameter, evaluate a signal quality of the second base station based on the second common-view satellite parameter and the second communication parameter, and in a case where the signal quality of the second base station is better than the signal quality of the first base station, configure, within a next cycle, the radio to receive the second signal from the second base station.

2. The working system according to claim 1, wherein the controller is configured to, in a case where a difference between the second common-view satellite parameter and the first common-view satellite parameter exceeds a first threshold and a difference between the first communication parameter and the second communication parameter exceeds a second threshold, configure, within the next cycle, the radio to receive the second signal from the second base station.

3. The working system according to claim 2, wherein the first common-view satellite parameter or the second common-view satellite parameter comprises at least one of: a number of common-view satellites between the autonomous mobile device and the first base station or the second base station, or an angular coverage of common-view satellites between the autonomous mobile device and the first base station or the second base station.

4. The working system according to claim 2, wherein the first communication parameter or the second communication parameter comprises a time interval between first signals or second signals received by the autonomous mobile device.

5. The working system according to claim 1, wherein the controller is configured to obtain a satellite observation data of the first base station from the first signal and determine common-view satellites between the autonomous mobile device and the first base station based on satellite observation data of the autonomous mobile device and the satellite observation data of the first base station, and/or obtain a satellite observation data of the second base station from the second signal and determine common-view satellites between the autonomous mobile device and the second base station based on satellite observation data of the autonomous mobile device and the satellite observation data of the second base station.

6. The working system according to claim 5, wherein each of the common-view satellites between the autonomous mobile device and the first base station or the second base station has a satellite elevation angle exceeding an elevation angle threshold and a signal-to-noise ratio exceeding a signal-to-noise ratio threshold.

7. The working system according to claim 1, wherein the controller is configured to, in a case where the signal quality of the first base station is better than the signal quality of the second base station, configure, within the next cycle, the radio to receive the first signal from the first base station.

8. The working system according to claim 1, wherein the autonomous mobile device comprises:
a housing;
a traveling assembly comprising a traveling electric motor and traveling wheels, wherein the traveling assembly is coupled to the housing; and
a mobile station comprising a satellite receiving antenna, a first radio, a second radio, and a computing unit;
wherein the satellite receiving antenna is configured to acquire a satellite signal;
the first radio is configured to receive a first signal from the first base station, wherein the first signal comprises the first differential data from the first base station;
the second radio is configured to receive a second signal from the second base station, wherein the second signal comprises the second differential data from the second base station;
the computing unit is configured to correct, based on the first differential data and/or the second differential data, initial coordinates of the autonomous mobile device computed based on the satellite signal to obtain device coordinates of the autonomous mobile device after correction; and
the controller is configured to control the autonomous mobile device based on the device coordinates output from the computing unit.

9. The working system according to claim 8, wherein the computing unit is configured to correct the initial coordinates based on the first differential data to obtain first device coordinates and correct the initial coordinates based on the second differential data to obtain second device coordinates; and
compare a solution accuracy of the first device coordinates and a solution accuracy of the second device coordinates and select device coordinates with a higher solution accuracy as the finally output device coordinates.

10. The working system according to claim 9, wherein the computing unit is configured to, in a case where the first device coordinates are a fixed solution and the second device coordinates are a floating point solution, output the first device coordinates as the final device coordinates; and
in a case where the first device coordinates are a floating point solution and the second device coordinates are a fixed solution, output the second device coordinates as the final device coordinates.

11. The working system according to claim 9, wherein the computing unit is configured to, in a case where both the first device coordinates and the second device coordinates are fixed solutions or floating point solutions, evaluate the signal quality of the first base station and the signal quality of the second base station and select device coordinates corresponding to a base station with a better signal quality as the finally output device coordinates.

12. The working system according to claim 1, wherein the first base station is configured to, after installation, determine first installation coordinates of the first base station and be set to a base station mode with the first installation coordinates; and the second base station is configured to, after installation, be set to a mobile station mode, compute second installation coordinates of the second base station in a coordinate system of the first base station, and be updated to the base station mode with the second installation coordinates.

13. The working system according to claim 12, wherein the first installation coordinates are acquired manually; the first installation coordinates are acquired by the first base station through single-point convergence computation; or the first installation coordinates are acquired by the first base station through network real-time kinematic (RTK).

14. The working system according to claim 1, wherein the controller is configured to acquire differential data from a network RTK service provider in a case where the first communication parameter between the autonomous mobile device and the first base station and/or the second communication parameter between the autonomous mobile device and the second base station fail to satisfy a corresponding parameter requirement.

15. The working system according to claim 1, wherein a working region of the autonomous mobile device comprises a plurality of sub-regions, and each of the plurality of sub-regions corresponds to one base station;
the autonomous mobile device comprises a satellite receiving antenna configured to acquire a satellite signal;
the radio is configured to receive a radio signal from one of at least two base stations; and
the controller is configured to compute device coordinates of the autonomous mobile device based on the satellite signal and the radio signal, determine a sub-region where the autonomous mobile device is currently located based on the device coordinates, and configure the radio to receive a radio signal from a base station corresponding to the sub-region where the autonomous mobile device is currently located.

16. An autonomous mobile device, comprising:
a housing;
a traveling assembly comprising a traveling electric motor and traveling wheels, wherein the traveling assembly is coupled to the housing; and
a controller and at least one radio;
wherein the controller is configured to acquire differential data from a network real-time kinematic (RTK) service provider in a case where a communication parameter between the autonomous mobile device and a base station fails to satisfy a corresponding parameter requirement.

17. The autonomous mobile device according to claim 16, wherein the controller is configured to acquire the differential data from the network RTK service provider in a case where the communication parameter or an operation value of the communication parameter exceeds a corresponding parameter threshold.

18. The autonomous mobile device according to claim 17, wherein the communication parameter comprises at least one of a distance parameter between the autonomous mobile device and the base station, a data loss parameter between the autonomous mobile device and the base station, or a common-view satellite parameter between the autonomous mobile device and the base station.

19. The autonomous mobile device according to claim 16, wherein the controller is further configured to periodically detect whether a current communication parameter satisfies the corresponding parameter requirement and, in a case where the communication parameter satisfies the corresponding parameter requirement, stop acquiring the differential data from the network RTK service provider and switch to acquiring differential data from the base station.

20. An external device, comprising:
a display; and
an electronic processor configured to load and execute an intelligent mowing program;
wherein the intelligent mowing program is configured to include:
displaying a map of a working site of an autonomous mobile device through the display; and
displaying a questionnaire corresponding to the working site and collecting interaction information from a user for the questionnaire through the display; and
calculating and outputting a number of base stations required within the working site based on at least the interaction information, and/or dividing the working site into a plurality of sub-regions based on at least the interaction information, wherein each of the plurality of sub-regions corresponds to one base station, and the autonomous mobile device, when moving within a sub-region of the plurality of sub-regions, receives differential data from a base station corresponding to the sub-region.
